# EUROPEAN PATENT APPLICATION

(11) **EP 4 451 519 A1**
(43) Date of publication of application: **23.10.2024**
(21) Application number: 24170662.1
(22) Date of filing: 16.04.2024
(51) Int. Cl.: H02K 1/27, H02K 21/24

(54) **MOTOR ROTOR**

(30) Priority: 17.04.2023 CN 202310410773
(71) Applicant: Contemporary Amperex Intelligence Technology (Shanghai) Limited, Shanghai 200000 (CN); Contemporary Amperex Technology Co., Limited, Ningde, Fujian 352100 (CN)
(72) Inventor: GUO, Minjie, Shanghai, 200000 (CN); XIA, Ji, Shanghai, 200000 (CN); HUANG, Liren, Shanghai, 200000 (CN)
(74) Representative: Rowlands, Stuart Michael

(57) **Abstract**

The present disclosure is applicable to the technical field of motors, and provides a motor rotor, a motor, a power assembly, and an electric apparatus, wherein the electric apparatus includes a power assembly, the power assembly includes a motor, and the motor includes a motor rotor, a stator, and a rotation shaft. The motor rotor includes a mounting frame and a magnet steel mounted to the mounting frame. The mounting frame is provided with a limiting wall for resisting a centrifugal movement of the magnet steel in a radial direction. By providing the mounting frame with a limiting wall for resisting the centrifugal movement of the magnet steel in the radial direction, on the basis that the magnet steel is mounted to the mounting frame, the mounting frame may also resist the centrifugal movement of the magnet steel in the radial direction by means of the limiting wall. That is, the limiting wall may share the stress of the mounting frame due to the centrifugal movement of the magnet steel in the radial direction, so that the mounting frame may bear a greater stress, so that the mounting frame and the magnet steel have a higher reliability of combination, and the problem that the magnet steel is throw out when the motor rotor rotates can be alleviated, which helps to meet a requirement of using the motor rotor at a high rotation speed.

## Description

### FIELD

The present disclosure relates to the technical field of motors, and more particularly to a motor rotor, a motor, a power assembly, and an electric apparatus.

### BACKGROUND

In the related art, a motor rotor includes a mounting frame and a magnet steel provided at the mounting frame.

In some cases, the tolerable stress of the mounting frame to the magnet steel is small and it is difficult to meet a requirement of using the motor rotor at a high rotation speed.

### SUMMARY

In view of the above problems, embodiments of the present disclosure provide a motor rotor, a motor, a power assembly, and an electric apparatus capable of improving the technical problem that a tolerable stress of a mounting frame is small.

In a first aspect, embodiments of the present disclosure provide a motor rotor including:
a mounting frame; and
a magnet steel mounted to the mounting frame.

The mounting frame is provided with a limiting wall for resisting a centrifugal movement of the magnet steel in a radial direction.

With the motor rotor according to the embodiments of the present disclosure, by providing the mounting frame with the limiting wall for resisting the centrifugal movement of the magnet steel in the radial direction, on the basis that the magnet steel is mounted to the mounting frame, the mounting frame may also resist the centrifugal movement of the magnet steel in the radial direction by means of the limiting wall. That is, the limiting wall may share the stress of the mounting frame due to the centrifugal movement of the magnet steel in the radial direction, so that the mounting frame may bear a greater stress, so that the mounting frame and the magnet steel have a higher reliability of combination, and thus the problem that the magnet steel is thrown out when the motor rotor rotates can be alleviated, which helps to meet a requirement of using the motor rotor at a high rotation speed.

In some embodiments, the mounting frame is provided with a plurality of mounting regions distributed in the radial direction, the magnet steel is mounted in the plurality of mounting regions, at least one of the plurality of mounting regions is provided with the limiting wall.

By dividing the mounting frame into a plurality of mounting regions, the magnet steel may be separately mounted in the radial direction in regions, facilitating the improvement of the mounting reliability of the magnet steel and the mounting frame, and facilitating the improvement of the tolerable stress of the mounting frame to the magnet steel. Alternatively, the centrifugal movement of the magnet steel in the radial direction may also be resisted by the limiting wall, and thus the mounting reliability of the mounting frame and the magnet steel may be improved, so that the tolerable stress of the mounting frame to the magnet steel may be improved. The arrangement is such that the mounting frame has a greater tolerable stress to meet a requirement of using the motor rotor at a high rotation speed.

In some embodiments, a separator is provided between two mounting regions adjacent to each other in the radial direction, a wall surface of the separator facing towards a central axis of the mounting frame is the limiting wall.

By providing the separator between two mounting regions adjacent to each other in the radial direction, the separator may separate the magnet steel, in one aspect, to allow the magnet steel to be mounted in regions, alternatively to facilitate the mounting operation of the magnet steel on the mounting frame, and alternatively to allow a high mounting flexibility of the magnet steel on the mounting frame. In addition, the separator may divide the magnet steel into a plurality of portions distributed in sequence in the radial direction, so that the plurality of portions of the magnet steel may respectively form eddy currents under the cooperation of the stator, i.e., form a plurality of small eddy currents. In this way, eddy current loss of the magnet steel may be reduced. In addition, the separator may allow stress of the mounting frame to be as close to the central axis as possible. In this way, it is helpful to improve the bearing capacity of the mounting frame to the magnet steel.

In some embodiments, each of the plurality of mounting regions adjacent to each other in the radial direction is provided with a magnet steel groove, the magnet steel groove having the limiting wall; the separator is provided between two adjacent magnet steel grooves, the wall surface of the separator facing towards the central axis of the mounting frame being the limiting wall of the magnet steel groove located at an inner side of the separator in the radial direction.

By using the above-mentioned technical solution, so that at least a part of the magnet steels may be embedded in the magnet steel groove, and the separator may also block the centrifugal movement of the magnet steel in the radial direction, so that the magnet steel may be sufficiently firmly bound in the magnet steel groove to be firmly mounted to the mounting frame, to facilitate the effect of high rotation speed of the motor rotor. In addition, the separator may separate the magnet steels so that the magnet steels are divided into a plurality of portions distributed in sequence in a radial direction, facilitating the mounting of the magnet steels, and facilitating the reduction of eddy current loss.

In some embodiments, each of the plurality of mounting regions is provided with the limiting wall, and the limiting walls of the plurality of mounting regions are distributed at intervals in the radial direction.

By using the above-mentioned technical solution, the mounting frame may resist the centrifugal movement of the magnet steel in the radial direction by means of a plurality of limiting walls distributed at intervals in the radial direction, so that the mounting frame may distribute in the radial direction the force applied to the mounting frame by the magnet steel during the rotation, i.e., the forced positions of the mounting frame are distributed in the radial direction without being concentrated in one radial position. As such, it is possible to reduce the stress at each radial position of the mounting frame, so that the mounting frame may withstand a large stress, and thus the mounting reliability of the mounting frame and the magnet steel may be high, which may meet a requirement of using the motor rotor at a high rotation speed.

In some embodiments, at least one of the pluralities of mounting regions is provided with a magnet steel groove having the limiting wall.

The arrangement is such that in an aspect, the mounting means of the magnet steel on the mounting frame is very flexible and may be combined according to actual use requirements. Alternatively, it is possible to allow at least a part of the magnet steel to be mounted in the magnet steel groove and to realize a binding action in the circumferential direction by the magnet steel, which is advantageous in improving the mounting reliability of the magnet steel and the mounting frame.

In some embodiments, the magnet steel has a profile matched with the limiting wall of the magnet steel groove.

The arrangement is such that in the radial direction, the area of the wall surface of the magnet steel facing towards the limiting wall may be as large as possible, i.e., the magnet steel has a larger area facing towards the limiting wall. As such, during the rotation of the motor rotor, the magnet steel may be perfectly attached to and abut against the limiting wall, which is beneficial to improve the resistance of the limiting wall to the centrifugal movement of the magnet steel in the radial direction, so that the mounting reliability of the magnet steel on the mounting frame may be improved. This is beneficial to achieve a requirement of using the motor rotor at a high rotation speed.

In some embodiments, each of the plurality of mounting regions adjacent to each other in the radial direction is provided with the magnet steel groove, the two adjacent magnet steel grooves are in communication with each other in the radial direction, and the limiting wall is provided at a position where the two adjacent magnet steel grooves are in communication with each other.

By using the above-mentioned technical solution, two adjacent magnet steel grooves are in communication with each other in a radial direction, and a limiting wall is formed at the position where the two adjacent magnet steel grooves are in communication with each other. The arrangement is such that the magnet steel may also be provided at the position where the two adjacent magnet steel grooves are in communication with each other in the radial direction, which is beneficial to increase the occupied area of the magnet steel on the side of the mounting frame in an axial direction, i.e., a larger area of the surface of the magnet steel in the axial direction may be retained, which may reduce the waste of the magnet steel, and facilitate the magnet steel to drive the mounting frame to rotate together under the action of the stator to improve the output efficiency of outputting power through a rotation shaft.

In some embodiments, a first boss is provided on a side wall in a circumferential direction of a part connecting the two adjacent magnet steel grooves, a wall surface of the first boss facing towards the central axis of the mounting frame is the limiting wall.

By using the above-mentioned technical solution, so that a first boss is provided on the side wall in the circumferential direction of the part connecting the two adjacent magnet steel grooves, and the mounting frame may resist the centrifugal movement of the magnet steel in the radial direction by means of the limiting wall on the first boss. As such, formation of the first boss may be achieved at the same time as the formation of the magnet steel groove on the mounting frame, so that the formation of the first boss and the limiting wall thereon is very simple and easy to achieve.

In some embodiments, the magnet steel is of an integral structure and has a second boss matched with the limiting wall; or
the magnet steel includes a plurality of blocks, at least a part of the plurality of blocks is arranged along the radial direction, among two blocks of the plurality of blocks that are adjacent to each other in the radial direction, at least one side in the circumferential direction of one block located on an inner side in the radial direction extends in the circumferential direction out of one block located on an outer side in the radial direction, to form a third boss matched with the limiting wall.

By using the above-mentioned technical solution, the magnet steel is integrally provided and second boss is provided, or the magnet steel is provided with a plurality of blocks and the third boss is formed by the dimension difference in the circumferential direction, to enable the magnet steel to be matched with the limiting walls, to improve the resistance of the limiting walls to the centrifugal movement of the magnet steel in the radial direction.

In some embodiments, the two adjacent magnet steel grooves are a first magnet steel groove and a second magnet steel groove located on an outer side of the first magnet steel groove in the radial direction; a circumferential dimension of an outer side of the second magnet steel groove in the radial direction is greater than a circumferential dimension of an inner side of the second magnet steel groove in the radial direction, and two opposite sides of the outer side in the radial direction of the first magnet steel groove in the circumferential direction extend in the circumferential direction out of the inner side of the second magnet steel groove in the radial direction, to form the first boss.

The arrangement is such that in one aspect, the circumferential dimension of the second magnet steel groove is gradually increased outwardly in the radial direction, so that the second magnet steel groove may be laid on the mounting frame as much as possible, and a large area of the surface of the magnet steel in the axial direction may be retained, so that the magnet steel may rotate the mounting frame together under the action of the stator to improve the output efficiency of outputting power through the rotation shaft. Alternatively, a limiting wall is formed on each of the two opposite sides in the circumferential direction of the part connecting the first magnet steel groove and the second magnet steel groove, which helps to improve the resistance of the mounting frame to the centrifugal movement of the magnet steel in the radial direction. This also helps to improve the stability of the magnet steel in the magnet steel groove.

In some embodiments, the plurality of magnet steel grooves arranged in the radial direction forms a first step structure in an axial direction, a wall surface of the first step structure facing towards a central axis of the mounting frame is the limiting wall.

By using the above-mentioned technical solution, the mounting frame may resist the radial centrifugal movement of the magnet steel at a plurality of positions in the radial direction, facilitating stress distribution on the mounting frame, to improve the resistance of the mounting frame to the radial centrifugal movement of the magnet steel, which helps to meet a requirement of using the motor rotor at a high rotation speed. In addition, the axial dimensions of the plurality of magnet steel grooves are reduced in sequence outwardly in the radial direction. As such, in one aspect, the center of gravity of the magnet steel comes closer towards a central axis of the mounting frame, which helps to improve the structural stability of the motor rotor as a whole. Alternatively, the axial dimension of the mounting frame is increased outwardly in the radial direction, which contributes to an increase in the tolerable stress of the part of the mounting frame on the outer side in the radial direction and to an increase in the resistance of the entire mounting frame to the centrifugal movement of the magnet steel in the radial direction, so that a requirement of using the motor rotor at a high rotation speed may be met.

In some embodiments, in the axial direction, radial distances of at least a part of the limiting walls with respect to the central axis of the mounting frame are gradually increased.

By using the solution described above, it is advantageous for the center of the magnet steel to be offset towards the central axis of the mounting frame and, correspondingly, for the axial dimension of the part of the mounting frame on the outer side in the radial direction to be increased, so that the resistance of the mounting frame to the radial centrifugal movements of the magnet steels is improved. In addition, the mounting operation of the magnet steels on the mounting frames is facilitated.

In some embodiments, a radial distance of at least one of the limiting walls with respect to the central axis of the mounting frame is greater than or smaller than radial distances of two limiting walls, which are adjacent to each other in the axial direction, with respect to the central axis of the mounting frame.

The arrangement is such that the relative limit strength of the magnet steel groove and the mounting frame in the axial direction may be improved, which helps to improve the mounting reliability of the mounting frame and the magnet steel, and further helps to meet a requirement of using the motor rotor at a high rotation speed.

In some embodiments, the mounting frame further comprises a base body, the first step structure being provided on the base body; the radial distance of at least one of the limiting walls with respect to the central axis of the mounting frame is greater than a radial distance of a limiting wall, which is away from the base body along the axial direction, with respect to the central axis of the mounting frame.

The arrangement is such that the relative limit strength of the magnet steel groove and the mounting frame in the axial direction may be improved, which helps to improve the mounting reliability of the mounting frame and the magnet steel, and further helps to meet a requirement of using the motor rotor at a high rotation speed.

In some embodiments, the magnet steel is of an integral structure and forms a second step structure matched with the limiting wall; or
the magnet steel comprises a plurality of blocks, at least a part of the plurality of blocks being provided in a radial direction, among the plurality of blocks adjacent to each other in the radial direction, at least one side in the axial direction of a block located on the inner side in the radial direction extends in the axial direction out of a block located on the outer side in the radial direction, to form a third step structure matched with the limiting wall.

By using the above-mentioned technical solution, the magnet steel is integrally provided, and the second step structure is formed, or the magnet steel is provided with a plurality of blocks and the third step structure is formed by an axial dimension difference, so that the magnet steel may be matched with the limiting wall to improve the resistance of the limiting wall to the radial centrifugal movement of the magnet steel.

In some embodiments, the mounting frame comprises a plurality of frame bodies, the plurality of frame bodies being connected in sequence to form the first step structure.

The mounting frame is obtained by splicing a plurality of frame bodies in sequence. The arrangement is such that the first step structure is formed on the mounting frame. In addition, a plurality of frame bodies are spliced in sequence to realize an oil path processing technology of the motor, and the degree of freedom of adding the oil path is high.

In some embodiments, at least a part of the plurality of frame bodies is a first frame body, a plurality of first frame bodies being provided; the plurality of first frame bodies is annularly arranged in sequence from inside to outside along the radial direction and has respective thicknesses gradually increased in an axial direction, to form the first step structure.

By using a plurality of first frame bodies having different axial thicknesses and having an annular shape, and the plurality of first frame bodies having their respective thicknesses gradually increased, and by being annularly arranged in sequence in the radial direction, a mounting frame may be obtained. The arrangement is such that it is very simple and easy to implement a forming operation of the mounting frame.

In some embodiments, at least a part of the plurality of frame bodies is a second frame body, the second frame body and the first frame body are provided in sequence along the axial direction to form the first step structure with the first frame body.

By using a plurality of first frame bodies distributed in sequence in the radial direction and a second frame body distributed in the axial direction with the first frame body, the plurality of frame bodies may be arranged in combination in the axial direction and the radial direction to form a first step structure, which facilitates acquiring a plurality of different types of the first step structures with high flexibility.

In some embodiments, at least a part of the plurality of frame bodies is an annular third frame body, a plurality of third frame bodies is provided; the plurality of third frame bodies is provided in sequence along the axial direction, and the at least two adjacent third frame bodies have different inner diameters, to form the first step structure.

By using a plurality of third frame bodies having at least partially different inner diameters and arranging the third frame bodies in sequence in the axial direction, a mounting frame may be obtained. The arrangement is such that it is very simple and easy to implement a forming operation of the mounting frame. In addition, by adjusting the position of the plurality of third frame bodies in the axial direction, different types of the first step structures may be obtained, so that the formation of the mounting frame is very flexible and versatile.

In some embodiments, at least a part of the plurality of frame bodies is a fourth frame body, the fourth frame body including a receiving member and an annular member provided on the receiving member, the third frame body and the receiving member are distributed in sequence along an axial direction and the annular member is annularly arranged on outer sides of the plurality of third frame bodies in the radial direction.

By using the above-mentioned technical solution, the plurality of third frame bodies may be limited in the axial direction under the action of the receiving member and may also be limited in the axial direction under the action of the annular member, so that the overall stability of the mounting frame may be improved, and the mounting reliability of the mounting frame and the magnet steel may be improved.

In some embodiments, the plurality of frame bodies is of an integral structure or a split connection structure.

By providing the frame bodies with an integral structure, the mounting frame may be constituted by a plurality of integrally provided frame bodies. By providing the frame bodies as a split connection structure, the frame bodies may be formed by splicing a plurality of parts, and then the plurality of frame bodies are spliced to form a mounting frame, to improve the splicing flexibility of the mounting frame and facilitate the construction of a plurality of different types of the first step structures.

In some embodiments, the mounting frame comprises a plurality of fifth frame bodies distributed in sequence along the axial direction, each of the plurality of fifth frame bodies having the magnet steel groove, the limiting walls of the magnet steel grooves of at least some adjacent ones of the plurality of fifth frame bodies being staggered in the radial direction.

The arrangement is such that by opening a magnet steel groove on each fifth mounting frame, and then splicing a plurality of fifth mounting frames in the axial direction, a mounting frame capable of distributing stress in the radial direction may be obtained, which is very convenient and easy to implement.

In some embodiments, circumferential dimensions of the magnet steel grooves are gradually increased outwardly in the radial direction.

The arrangement is such that each magnet steel groove may be substantially in the shape of a sector, a trapezoid, or the like, from an axial perspective of view, which facilitates the laying of the magnet steel grooves on the mounting frame as much as possible, which helps to increase the area occupied by the magnet steel on a side of the mounting frame in the axial direction. That is, a large area of the surface of the magnet steel in the axial direction may be retained, so that the magnet steel may rotate the mounting frame together under the action of the stator to improve the output efficiency of outputting power through the rotation shaft.

In some embodiments, the magnet steel includes a plurality of blocks, the plurality of blocks being distributed in sequence along the radial direction, and/or along the axial direction, and/or along the circumferential direction.

The arrangement is such that there are many ways to combine magnetic steel 12 freely and flexibly, facilitating the magnet steel to be matched with a plurality of mounting regions of the mounting frame, thereby facilitating the resistance of the limiting walls of the mounting frame to the radial centrifugal movement of the mounting regions.

In some embodiments, blocks of the plurality of blocks that are adjacent to each other in the radial direction are arranged or bonded at intervals; and/or
blocks of the plurality of blocks that are adjacent to each other in the circumferential direction are arranged or bonded at intervals.

By using the above-mentioned technical solution, it is difficult for the magnetic field lines to pass through two adjacent blocks arranged or bonded at intervals, and the adjacent blocks in the radial direction may form eddy currents alone, and the adjacent blocks in the circumferential direction may also form eddy currents alone. That is, the eddy currents formed during operation of the motor may be reduced, helping to reduce eddy current losses.

In some embodiments, the magnet steel is provided on a surface of the mounting frame in the axial direction, and the mounting frame is provided with the limiting wall located at an outer side of the magnet steel in the radial direction.

By using the above-mentioned technical solution, so that the mounting frame is provided with a limiting wall located on the outer side of the magnet steel in the radial direction, so that the limiting wall may block the magnet steel inwardly in the radial direction to resist the centrifugal movement of the magnet steel in the radial direction, thereby enabling the mounting frame to have a high tolerable stress for the magnet steel, thereby enabling a requirement of using the motor rotor at a high rotation speed.

In some embodiments, the mounting frame is a permeability magnetic material member or a non-permeability magnetic material member.

By using the above-mentioned technical solution, the mounting frame may be of a permeability magnetic structure or a non-permeability magnetic structure. That is, the material to make the mounting frame may be selected relatively free.

In some embodiments, a plurality of magnet steels is provided and distributed in sequence along a circumferential direction on the mounting frame; the mounting frame further includes a plurality of limiting structures distributed in sequence along the circumferential direction, each of the plurality of magnet steels being located between two limiting structures of the plurality of limiting structures that are adjacent to each other in the circumferential direction.

The arrangement is such that two adjacent magnet steels are separated by the limiting structure so that the limiting structure separates magnet steels of different magnetic poles to facilitate the magnet steels to drive the motor rotor to rotate as a whole under the action of the stator to output power through the rotation shaft.

In some embodiments, the magnet steel is fixedly connected to the mounting frame.

The arrangement is such that the relative position of the magnet steel and the mounting frame is fixed, so that the radial centrifugal movements of the magnet steel is resisted by the limiting wall, and the fixed connection relationship between the magnet steel and the mounting frame may also enable the mounting frame to resist the radial centrifugal movements of the magnet steel, which helps to improve the mounting reliability of the mounting frame and the magnet steel, and facilitates the effect of high rotation speed.

In some embodiments, the magnet steel is in an interference fit with the mounting frame; and/or the magnet steel is in an injection-molded connection with the mounting frame; and/or the magnet steel is adhesively fixed to the mounting frame.

By using the above-mentioned technical solution, the magnet steel may be fixed with the mounting frame by at least one of interference fit, injection-molded connection and fixation by adhesion, which may all enable a high mounting reliability between the mounting frame and the magnet steel.

In some embodiments, the motor rotor further includes a protective component, the magnet steel being exposed to one side or both sides of the mounting frame in the axial direction, the protective component being arranged on a side of the mounting frame to which the magnet steel is exposed.

The protective component is arranged on a side in the axial direction of the mounting frame to which the magnet steel is exposed, so that the protective component may seal the magnet steel together with the mounting frame to realize the protection of the magnet steel.

In some embodiments, the protective component is a permeability magnetic material component.

The arrangement is such that in one aspect, it is not only possible for the main magnetic field to be synchronized with the motor rotor to pass through to achieve torque output. Alternatively, a harmonic magnetic field of the stator may be shielded by magnetic permeability of the protective component to reduce eddy current loss, thereby reducing eddy current loss of the motor using the motor rotor and improving the output efficiency of the motor.

In some embodiments, the protective component has a positioning groove, at least a part of the magnet steel being located in the positioning groove.

The arrangement is such that a groove wall of the positioning groove facing towards the central axis of the mounting frame in the radial direction may also resist the centrifugal movement of the magnet steel in the radial direction, which may improve the resistance of the motor rotor to the centrifugal movement of the magnet steel in the radial direction to improve the structural stability and reliability of the motor rotor and facilitate the effect of using the motor rotor at a high rotation speed.

In some embodiments, a plurality of mounting frames is provided and distributed in sequence along the axial direction, the protective component being provided between two adjacent mounting frames.

The arrangement is such that by arranging a protective component between two adjacent mounting frames, one protective component may achieve a protective effect against the magnet steel on the two mounting frames, which reduces the use of the protective component and facilitates a miniaturized design of the motor rotor.

In some embodiments, a plurality of protective components is provided and distributed in sequence along the axial direction; or
a plurality of mounting frames distributed in sequence along the axial direction is provided between two adjacent ones of the plurality of protective components; and/or one mounting frame is provided between two adjacent ones of the plurality of protective components, the magnet steel being exposed to both sides of the mounting frame in the axial direction.

The arrangement is such that the motor rotors may interact with the stators on two opposite sides, respectively, to facilitate the rotation of one motor rotor driven by both stators to improve output efficiency.

In a second aspect, embodiments of the present disclosure also provide a motor including the motor rotor.

Embodiments of the present disclosure provide a motor that allows the mounting frame to tolerate significant stress using the motor rotor according to the embodiments described above. As such, the mounting frame and the magnet steel have a high combination reliability, i.e., the motor rotor has a high structural reliability, and it is possible to alleviate the problem that the magnet steel is thrown out when the motor rotor rotates. Therefore, the motor may meet a requirement of using the motor rotor at a high rotation speed and has high output efficiency.

In a third aspect, embodiments of the present disclosure also provide a power assembly including the motor.

Embodiments of the present disclosure provide a power assembly, and by using the motor according to the above-mentioned embodiments, a requirement of using the motor at a high rotation speed can be met, and the output efficiency is high, thereby enabling the power output efficiency of the power assembly to be high.

In a fourth aspect, embodiments of the present disclosure also provide an electric apparatus including the motor or the power assembly.

Embodiments of the present disclosure provide an electric apparatus that may deliver more efficient power to better meet operational requirements by using a motor or power assembly according to the embodiments described above.

The above description is merely an overview of the technical solution of the present disclosure, which may be implemented according to the contents of the description in order to enable the technical means of the present disclosure to be more clearly appreciated, and in order to enable the above and other objects, features and advantages of the present disclosure to be more clearly appreciated, particular embodiments of the present disclosure are set forth below.

### BRIEF DESCRIPTION OF DRAWINGS

To describe the technical solutions of the embodiments of the present disclosure more clearly, the following briefly introduces the accompanying drawings required for describing the embodiments and the prior art. It is apparent that the accompanying drawings in the following description show only some embodiments of the present disclosure, and a person of ordinary skill in the art may still derive other drawings from these accompanying drawings without creative efforts.
FIG. 1 is a schematic diagram showing an electric apparatus according to some embodiments of the present disclosure;
FIG. 2 is a structural schematic diagram showing a motor according to some embodiments of the present disclosure;
FIG. 3 is a structural schematic diagram showing a motor according to some embodiments of the present disclosure;
FIG. 4 is a structural schematic diagram showing a motor according to some embodiments of the present disclosure;
FIG. 5 is a structural schematic diagram showing a motor according to some embodiments of the present disclosure;
FIG. 6 is a schematic perspective view of a motor rotor according to some embodiments of the present disclosure;
FIG. 7 is an exploded view of the motor rotor shown in FIG. 6;
FIG. 8 is an exploded view of a motor rotor according to some embodiments of the present disclosure;
FIG. 9 is an exploded view of a motor rotor according to some embodiments of the present disclosure;
FIG. 10 is a structural schematic diagram showing a mounting frame of a motor rotor according to some embodiments of the present disclosure;
FIG. 11 is a structural schematic diagram showing a mounting frame of a motor rotor according to some embodiments of the present disclosure;
FIG. 12 is an enlarged view at A in FIG. 11;
FIG. 13 is an enlarged partial view of a mounting frame of a motor rotor according to some embodiments of the present disclosure;
FIG. 14 is an enlarged partial view of a mounting frame of a motor rotor according to some embodiments of the present disclosure;
FIG. 15 is a perspective view of a magnet steel of a motor rotor according to some embodiments of the present disclosure;
FIG. 16 is a perspective view of a magnet steel of a motor rotor according to some embodiments of the present disclosure;
FIG. 17 is a perspective view of a mounting frame of a motor rotor according to some embodiments of the present disclosure;
FIG. 18 is a sectional view taken along B-B in FIG. 17;
FIG. 19 is an enlarged partial view of a mounting frame of a motor rotor according to some embodiments of the present disclosure;
FIG. 20 is an enlarged partial view of a mounting frame of a motor rotor according to some embodiments of the present disclosure;
FIG. 21 is a perspective view of a magnet steel of a motor rotor according to some embodiments of the present disclosure;
FIG. 22 is a structural schematic diagram showing a magnet steel of a motor rotor according to some embodiments of the present disclosure;
FIG. 23 is a structural schematic diagram showing a magnet steel of a motor rotor according to some embodiments of the present disclosure;
FIG. 24 is a partially exploded view of a motor rotor according to some embodiments of the present disclosure;
FIG. 25 is a sectional view of the mounting frame of the motor rotor shown in FIG. 24 after assembly;
FIG. 26 is a sectional view of a mounting frame of a motor rotor according to some embodiments of the present disclosure;
FIG. 27 is a partially exploded view of a motor rotor according to some embodiments of the present disclosure;
FIG. 28 is a sectional view of the mounting frame of the motor rotor shown in FIG. 27 after assembly;
FIG. 29 is an exploded view of a mounting frame of a motor rotor according to some embodiments of the present disclosure;
FIG. 30 is a sectional view of the mounting frame of the motor rotor shown in FIG. 29 after assembly;
FIG. 31 is an exploded view of a motor rotor according to some embodiments of the present disclosure;
FIG. 32 is an exploded view of a motor rotor according to some embodiments of the present disclosure.

Reference numerals are as follows:
1000-power assembly; 100-motor; 200-transmission; 300-battery; 400-controller; 10-motor rotor; 20-stator; 30-rotation shaft; 101-limiting wall; 101a-first limiting wall; 101b-second limiting wall; 101c-third limiting wall; 101d-fifth limiting wall; 101e-sixth limiting wall; 101f-seventh limiting wall; 102-mounting region; 1021-magnet steel groove; 1021a-first magnet steel groove; 1021b-second magnet steel groove; 103-opening; 104-fourth limiting wall; 105-eighth limiting wall; 11-mounting frame; 1101-first step structure; 111-separator; 112-first boss; 113-frame body; 113a-first frame body; 113b-second frame body; 113c-third frame body; 113d-fourth frame body; 1131d-receiving member; 1132d-annular member; 1133d-first intermediate member; 113e-fifth frame body; 113f-sixth frame body; 1131f-bottom plate; 1132f-second intermediate member; 113g-base body; 114-limiting structure; 115-retainer; 12-magnet steel; 1201-second step structure; 1202-third step structure; 121-block; 121a-first block; 121b-second block; 1211-second boss; 1212-third boss; 13-protective component; L-central axis; Z-axial direction; Y-radial direction; X-circumferential direction; H1-circumferential dimension of the radial outer side of the second magnet steel groove; H2-circumferential dimension of the radial inner side of the second magnet steel groove; H3-circumferential dimension of the radial outer side of the first magnet steel groove; H4-radial distance of the first limiting wall with respect to the central axis; H5-radial distance of the second limiting wall with respect to the central axis; H6-radial distance of the third limiting wall with respect to the central axis; H7-radial distance of the fifth limiting wall with respect to the central axis; H8-radial distance of the sixth limiting wall with respect to the central axis; H9-radial distance of the seventh limiting wall with respect to the central axis; H10-circumferential dimension of the radial outer side of the first block; H11-circumferential dimension of the radial inner side of the second block.

### DESCRIPTION OF EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

In the description of the present disclosure,, it is to be appreciated that the terms "length", "width", "upper", "lower", "front", "rear", "left", "right", "vertical", "horizontal", "top", "bottom", "inner", "outer", and the like, indicate orientations or positional relationships based on the orientations or positional relationships shown in the drawings, are merely for convenience in describing the present disclosure and simplifying the description, and do not indicate or imply that the device or element referred to must have a particular orientation, be constructed in a particular orientation, and be operated, and therefore, should not be construed as limiting the present disclosure.

Further, the terms "first" and "second" are only used for descriptive purposes and are not to be construed as indicating or implying relative importance or implicitly indicating the number of technical features indicated. Thus, a feature defined as "first" or "second" may explicitly or implicitly include one or more of the stated features.

In the description of the present disclosure, the meaning of "a plurality of" is two or more, and "two or more" includes two unless specifically and specifically limited otherwise. Accordingly, "a plurality of groups" means more than two groups, including two groups.

In the description of the present disclosure, unless explicitly stipulated and limited otherwise, the terms such as "mounted", "coupled", "connected", "fixed" and the like are to be appreciated in a broad sense, for example, they may be fixedly connected or detachably connected, or integrated; may be a mechanical connection or an electrical connection; it may be directly coupled or it may be indirectly coupled through an intermediate medium, and may be the communication between two elements or the interaction relationship between two elements. For a person skilled in the art, the specific meaning of the above terms in the present disclosure may be appreciated according to specific situations.

In the description of the present disclosure, the term "and/or" is merely an association that describes an associated object and indicates that there may be three relationships, e.g. A and/or B may indicate that: there are three cases of A, both A and B, and B. In addition, in the present disclosure, the character "/" generally indicates that the associated object is an "or" relationship.

In the description of the embodiments of the present disclosure, the technical terms "near" and "adjacent" refer to positional proximity, unless expressly specified and defined otherwise. For example, A1, A2 and B are three components, the distance between A1 and B is greater than the distance between A2 and B, then A2 is closer to B than A1, i.e., A2 is adjacent to B, it may also be that B is adjacent to A2, in other words, A2 is adjacent to B. For another example, when there are a plurality of C components, they are respectively C1, C2 ...... CN, and when one of the C components, such as C2, is closer to the B component than the other C component, then B is adjacent to C2, it may also be that C2 is adjacent to B, in other words, C2 is adjacent to B.

In the related art, a motor rotor generally includes a mounting frame and a magnet steel provided at the mounting frame.

In some cases, a tolerable stress of the mounting frame to the magnet steel is small. In some embodiments, when the motor rotor rotates, the magnet steel generates a large centrifugal force and thus has a large tendency of radial centrifugal movement, and the magnet steel has a weak combining ability with the mounting frame, making it difficult for the mounting frame to well resist the centrifugal movement of the magnet steel in the radial direction. That is, the tolerable stress of the mounting frame to the magnet steel is small, thus there is a risk that the magnet steel is thrown out to the outside after breaking the coupling between the magnet steel and the mounting frame, so that it is difficult to meet a requirement of using the motor rotor at a high rotation speed.

In some examples, for surface-mounted motor rotor, the magnet steel is bonded to the surface of the mounting frame in the axial direction, in particular by means of a liquid glue or a fixing glue. In the bonding mode, the bonding strength is limited after all, so that when the motor rotor rotates at a high speed, there is a risk that the magnet steel is thrown out to the outside with the radial centrifugal movement.

In view of the above, the embodiments of the present disclosure provide a motor rotor, a motor, a power assembly, and an electric apparatus, by providing the mounting frame with a limiting wall for resisting centrifugal movement of the magnet steel in the radial direction, the mounting frame may also resist the centrifugal movement of the magnet steel in the radial direction by means of the limiting wall on the basis that the magnet steel is mounted to the mounting frame. That is, the limiting wall may share the stress of the mounting frame due to the centrifugal movement of the magnet steel in the radial direction. In this way, the mounting frame may bear a greater stress, so that the mounting frame and the magnet steel have a higher reliability of combination. Therefore, the problem that the magnet steel is thrown out to the outside when the motor rotor rotates can be improved, so that the motor rotor may meet a requirement of using the motor rotor at a high rotation speed.

The motor involved in the embodiments of the present disclosure is also referred to as an electromotor. The motor is generally composed of two parts, i.e., a motor rotor and a stator. The motor is a device for converting electrical energy into mechanical energy. In some embodiments, the motor generates a rotation magnetic field using an energization coil to act on a motor rotor to create a magnetoelectric force rotation torque. The fixation part of the motor is referred to as a stator; and the rotation part of the motor is referred to as a motor rotor.

The motor may be divided into a radial motor and an axial motor. The radial motor is a motor in which a stator and a motor rotor are radially arranged. For example, the stator is located at an outer periphery of the motor rotor, i.e., the stator is sleeved at the outer periphery of the motor rotor; alternatively, the motor rotor is located at the outer periphery of the stator, i.e., the motor rotor is sleeved at the outer periphery of the stator. The axial motor is a motor in which a stator and a motor rotor are axially arranged.

The motor rotor according to the embodiments of the present disclosure may be applied to a motor. In some embodiments, the motor rotor may be used for the axial motor, and of course, may also be applied to the radial motor if the structure of the motor rotor may meet a requirement of using the radial motor.

The motor mentioned in the embodiments of the present disclosure may be applied to a power assembly as a power source; it may also be applied to an electric apparatus as a power source. The power assembly referred to in the embodiments of the present disclosure may also be applied to an electric apparatus as a power source.

The electric apparatus may be, but is not limited to, an electric toy, an electric tool, an electric bicycle, a motorcycle, a ship, a spacecraft, and the like. Electric toy may include stationary or mobile electric toys such as, for example, game consoles, electric car toys, electric boat toys, and electric aircraft toys and the like. The spacecraft may include airplanes, rockets, spaceplanes, and spaceships and the like.

The electric apparatus may also be a vehicle or a vehicle chassis. The vehicle may be a fuel oil vehicle, a gas vehicle or a new energy vehicle, and the new energy vehicle may be a pure electric vehicle, a hybrid vehicle or an extended-range vehicle and the like. The motor may be integrated with one or more of a power supply, a controller, a transmission, and the like. to form a power assembly.

For convenience of description, the embodiments of the present disclosure will be described taking an electric apparatus as a vehicle as an example.

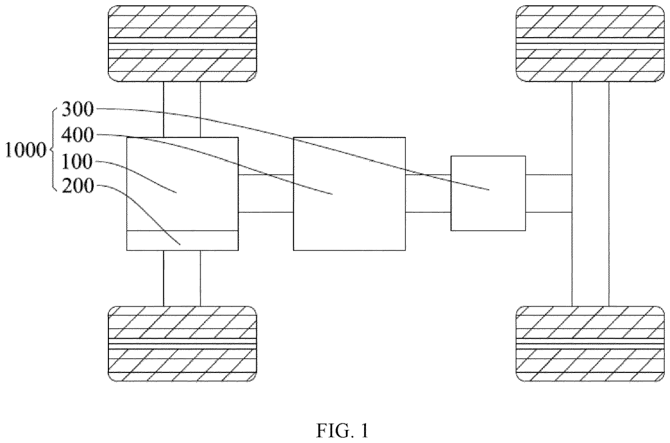

Referring to FIG. 1, which is a structural schematic diagram showing a vehicle according to some embodiments of the present disclosure. The vehicle is provided with the above-described power assembly 1000 at interior thereof. The power assembly 1000 may be provided at the bottom or head or tail of the vehicle. The power assembly 1000 may be used for the vehicle to improve power.

In some embodiments, the power assembly 1000 may include a motor 100 acting as a power source for the power assembly 1000. It might be appreciated that the power assembly 1000 is not limited to use in a vehicle, but may be used in other electric apparatuses requiring power output.

In some embodiments, the power assembly 1000 may also include a controller 400 and a battery 300, wherein the controller 400 is configured to controlling operation of the power assembly 1000. For example, the start, shift, and stop of the power assembly 1000 are controlled, specifically, the start, shift, and stop of the motor 100 are controlled. The controller 400 may also be configured to control the battery 300 to provide power to the power assembly 1000, and in particular to control the battery 300 to provide power to the motor 100, such as for operating power requirements during start-up, navigation, and travel of the vehicle.

In some embodiments, the power assembly 1000 may also include a transmission 200 coupled to the axial motor to effectuate a change in torque of the axial motor. The transmission 200, also referred to as a gearbox, is a mechanism for varying the speed and torque from an engine that is capable of fixed or stepped changes in output and input shaft gear ratios.

In some embodiments, the controller 400 may be integrated with the motor 100 to form the power assembly 1000. The battery 300 may also be integrated with the motor 100 to form the power assembly 1000. The transmission 200 and the controller 400 may also be integrated with the motor 100 to form the power assembly 1000. The transmission 200, the controller 400, the battery 300, and the axial motor may also be integrated to form the power assembly 1000. Of course, in some embodiments, the power assembly 1000 may also integrate other structures, such as cooling oil paths and the like.

For ease of description, the embodiments of the present disclosure will be described taking the motor 100 as the axial motor as an example.

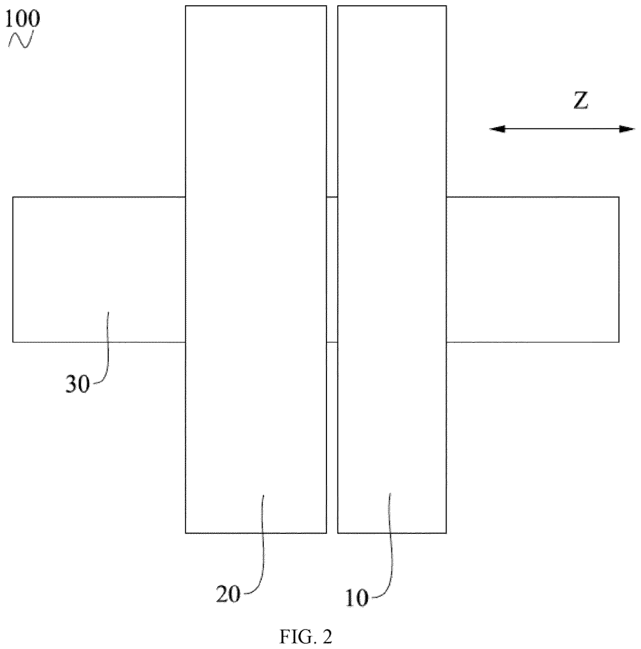

Referring to FIGS. 2-5, which are structural schematic diagrams showing the motor 100 according to various embodiments of the present disclosure. The embodiments of the present disclosure provide a motor 100 including a rotation shaft 30, a stator 20 and a motor rotor 10. The motor rotor 10 is fixedly mounted to a rotation shaft 30, and the stator 20 is located at a side of the motor rotor 10. In some embodiments, the stator 20 and the motor rotor 10 are provided in sequence in an axial direction Z.

The rotation shaft 30 refers to a shaft-like structure used for outputting power in the motor 100, and the rotation shaft 30 is fixedly connected to the motor rotor 10, so that the rotation shaft 30 may be driven to rotate by the motor rotor 10 to output power.

The stator 20 and the rotation shaft 30 may be relatively rotated, and thus the stator 20 and the motor rotor 10 may be relatively rotated. In some embodiments, the stator 20 may be supported on the rotation shaft 30 by a bearing. Also, in some embodiments, when the motor 100 includes a housing, the stator 20 may be fixed to the housing, the stator 20 may be supported by the housing, and the motor rotor 10 and the rotation shaft 30 may be rotatably mounted in the housing such that the stator 20 and the motor rotor 10 may rotate with respect to each other, facilitating rotation of the motor rotor 10 by the stator 20.

The stator 20 is located at a side of the motor rotor 10, that is, the stator 20 is located at one side of the motor rotor 10 in the axial direction Z, so that the stator 20 drives the motor rotor 10 to rotate, thereby driving the rotation shaft 30 to rotate.

When the energization coil on the stator 20 is energized, a magnetic field may be generated, and acts on the motor rotor 10 to form a magnetoelectric force rotation torque to realize the rotation of the motor rotor 10, thereby driving the rotation shaft 30 to rotate. In this way, the power is output via the rotation shaft 30.

In some embodiments, referring to FIG. 2, the motor rotor 10 may be one, and the stator 20 may be one. The stator 20 is located at one of sides of the motor rotor 10 in the axial direction Z, and the motor 100 has a simple structure and a small volume.

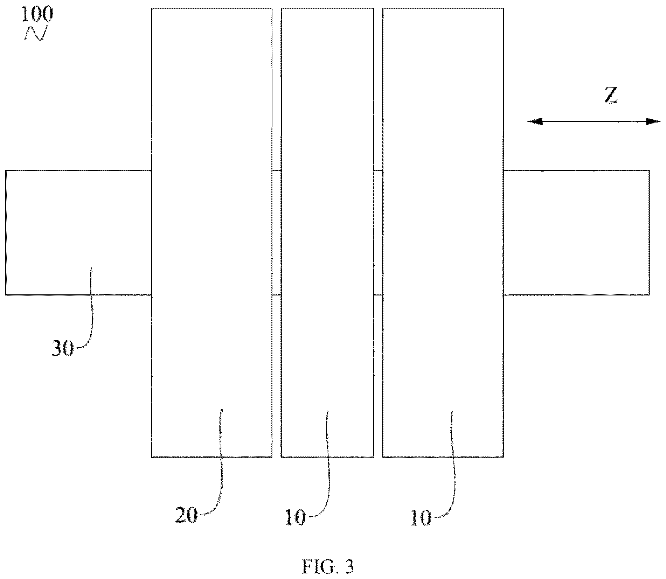

In some embodiments, referring to FIG. 3, the motor 100 includes two stators 20 and a motor rotor 10. The two stators 20 are located at two opposite sides of the motor rotor 10 in the axial direction Z, so that the same motor rotor 10 may be driven to rotate by the two stators 20 to increase the output power. Moreover, the structure of the motor 100 is more compact.

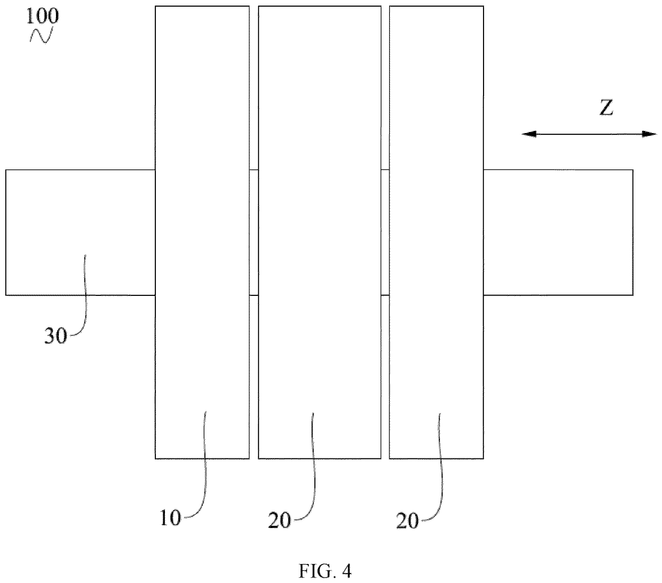

In some embodiments, referring to FIG. 4, the motor 100 includes two motor rotors 10 and a stator 20. The two motor rotors 10 are located at two opposite sides of the stator 20 in the axial direction Z, and the two motor rotors 10 are both fixedly connected to the rotation shaft 30, so that the same two motor rotors 10 may be driven to rotate by the one stator 20, and the same rotation shaft 30 may be driven to rotate, to increase the output power. Moreover, the structure of the motor 100 is more compact.

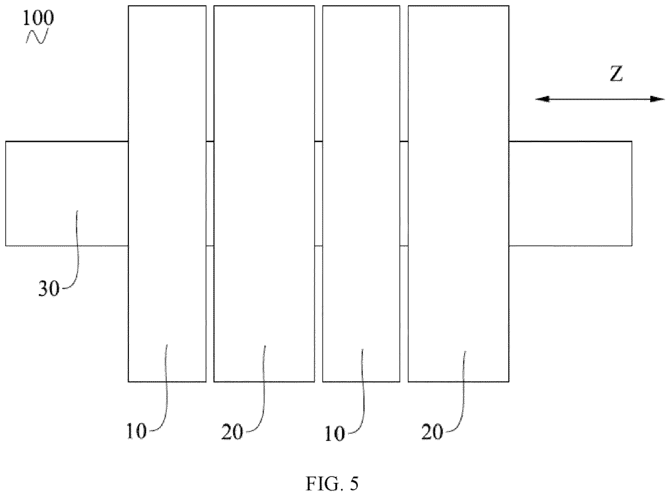

In some embodiments, referring to FIG. 5, the motor 100 includes a plurality of motor rotors 10 and a plurality of stators 20 arranged in the axial direction Z. The stator 20 is provided between two adjacent motor rotors 10 in the axial direction Z, the motor rotor 10 is provided between two adjacent stators 20 in the axial direction Z, and a plurality of motor rotors 10 is driven to rotate by a plurality of stators 20, thereby driving the rotation shaft 30 to rotate, to increase output power.

It should be added that the axial direction Z refers to the axial direction Z of the rotation shaft 30, i.e., the direction of the central axis of the rotation shaft 30. The axial direction Z of the rotation shaft 30 is also the axial direction Z of the stator 20 and is also the axial direction Z of the motor rotor 10. Thus, the axial direction Z also refers to the axial direction Z of the motor rotor 10.

A radial direction Y refers to the radial direction Y of the rotation shaft 30, i.e., the radius direction of the rotation shaft 30. The radial direction Y of the rotation shaft 30 is also the radial direction Y of the stator 20 and is also the radial direction Y of the motor rotor 10. Thus, the radial direction Y also refers to the radial direction Y of the motor rotor 10. Here, the radial direction Y of the motor rotor 10 is perpendicular to the axial direction Z of the motor rotor 10.

A circumferential direction X refers to a circumferential direction around the axial direction Z of the rotation shaft 30 and is also to a direction around the axial direction Z of the motor rotor 10. Here, the circumferential direction X of the motor rotor 10 is perpendicular to the axial direction Z of the motor rotor 10.

Here, in the above and the following description regarding the motor 100 and the motor rotor 10, the axial direction Z, the circumferential direction X and the radial direction Y have the same meaning, and the explanation will not be repeated.

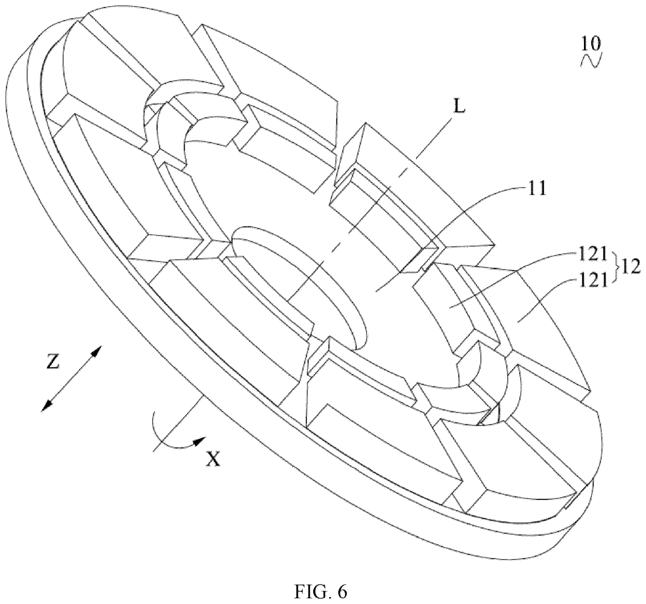

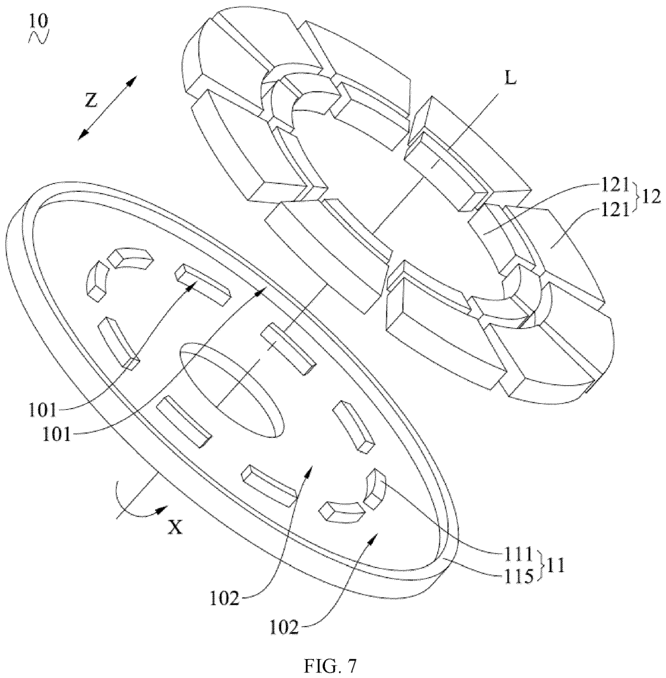

Referring to FIGS. 6 and 7, which are perspective views of a motor rotor 10 according to two embodiments of the present disclosure. The motor rotor 10 according to the embodiment of the present disclosure includes a mounting frame 11 and a magnet steel 12. The magnet steel 12 is mounted to the mounting frame 11. The mounting frame 11 is provided with a limiting wall 101 for resisting a centrifugal movement of the magnet steel 12 in the radial direction Y

The mounting frame 11 refers to a frame structure for fixing and supporting the magnet steel 12 in the motor rotor 10.

The mounting frame 11 is fixedly connected to the rotation shaft 30 of the motor 100 to achieve the effect of fixedly connecting the motor rotor 10 to the rotation shaft 30. The mounting frame 11 has a central axis L extending in the axial direction Z, and the mounting frame 11 may rotate with the central axis L as an axis to drive the rotation shaft 30 to rotate. The mounting frame 11 is provided coaxially with the rotation shaft 30, and specifically, the central axis L of the mounting frame 11 is provided to coincide with the rotation axis of the rotation shaft 30.

In some possible designs, the mounting frame 11 may be provided in a disc-like configuration to facilitate smooth rotation of the mounting frame 11. On this basis, the mounting frame 11 also has a circumferential direction X, an axial direction Z and a radial direction Y corresponding to the motor rotor 10. The axial direction Z of the mounting frame 11 is parallel to a thickness direction of the mounting frame 11.

The magnet steel 12 refers to a magnet for providing a magnetic field in the motor rotor 10. The magnet steel 12 generally refers to an aluminum-nickel-cobalt alloy, synthesized from several hard strong metals. As an example, the magnet steel 12 may be synthesized from iron and aluminum, nickel, cobalt, and the like. As an example, the magnet steel 12 may be synthesized from copper, niobium, tantalum, or the like. When the motor 100 is operating, the stator 20 is energized and generates a magnetic field to act on the magnet steel 12, so that the magnet steel 12 rotates the mounting frame 11, and thus rotates the rotation shaft 30, thereby outputting power through the rotation shaft 30.

The limiting wall 101 refers to a wall surface of the mounting frame 11. The limiting wall 101 is provided facing toward the central axis L of the mounting frame 11, i.e., the limiting wall 101 is not parallel to the radial direction Y As such, the limiting wall 101 may block the magnet steel 12 toward the central axis L of the mounting frame 11 to resist the centrifugal movement of the magnet steel 12 in the radial direction Y Here, in some possible designs, the limiting wall 101 may face towards the central axis L of the mounting frame 11 in the radial direction Y, i.e., the limiting wall 101 is perpendicular to the radial direction Y In some possible designs, the limiting wall 101 may also face towards the central axis L of the mounting frame 11 in a direction intersecting the radial direction Y, i.e., the limiting wall 101 intersects the radial direction Y

With the motor rotor 10 according to the embodiment of the present disclosure, by providing a limiting wall 101 on the mounting frame 11, based on the magnet steel 12 being mounted to the mounting frame 11, the mounting frame 11 may also resist the centrifugal movement of the magnet steel 12 in the radial direction Y by the limiting wall 101. That is, the magnet steel 12 is mounted to the mounting frame 11 such that the mounting frame 11 may resist the centrifugal movement of the magnet steel 12 in the radial direction Y by joining the mounting frame 11 with the magnet steel 12. In addition, the mounting frame 11 may also resist the centrifugal movement of the magnet steel 12 in the radial direction Y by means of the limiting wall 101, so that the limiting wall 101 may share the stress of the mounting frame 11 due to the centrifugal movement of the magnet steel 12 in the radial direction Y, thereby enabling the mounting frame 11 to bear a large stress. As such, the mounting frame 11 and the magnet steel 12 have high coupling reliability, and it is possible to improve the problem that the magnet steel 12 is thrown out to the outside when the motor rotor 10 rotates, and thus, a requirement of using the motor rotor 10 at a high rotation speed may be met.

Here, the magnet steel 12 may have various distribution forms, and one magnet steel 12 or a plurality of magnet steels 12 may be provided.

In some embodiments, a plurality of magnet steels 12 may be distributed in sequence on the mounting frame 11 in the circumferential direction X, particularly at outer periphery of the rotation shaft 30. In some possible examples, one of the pluralities of magnet steels 12 may correspond to one magnetic pole, which may be a south pole (S-pole) or a north pole (N-pole). In addition, the magnet steels 12 with different magnetic poles are arranged in a staggered manner in the circumferential direction X, i.e., the distribution of a plurality of magnet steels 12 in the circumferential direction X is: a south pole magnet steel 12, a north pole magnet steel 12, a south pole magnet steel 12, a north pole magnet steel 12, ..., and the like. In some possible examples, each magnet steel 12 has magnetic poles with opposite polarities, namely the south pole (S-pole) and the north pole (N-pole).

In some embodiments, a plurality of magnet steels 12 may be distributed in sequence in the mounting frame 11 in the radial direction Y In some possible examples, one magnet steel 12 may correspond to one magnetic pole, which may be a south pole (S-pole) or a north pole (N-pole), and the magnet steels 12 with different magnetic poles are arranged in a staggered manner in the radial direction Y In some possible designs, each magnet steel 12 has magnetic poles with opposite polarities.

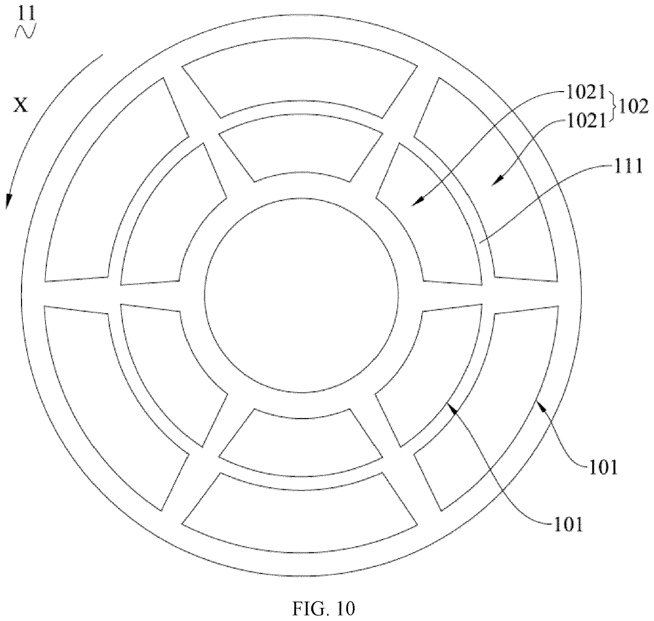

In some embodiments, referring to FIGS. 7-10, FIGS. 7-9 show exploded views of the motor rotor 10 according to three embodiments of the present disclosure, respectively, and FIG. 10 is a structural schematic diagram showing the mounting frame 11 of the motor rotor 10 according to some embodiments of the present disclosure. The mounting frame 11 is provided with a plurality of mounting regions 102 distributed in sequence in the radial direction Y The magnet steel 12 is mounted in the plurality of mounting regions 102 distributed in sequence in the radial direction Y, and at least one of the mounting regions 102 is provided with the above-mentioned limiting wall 101.

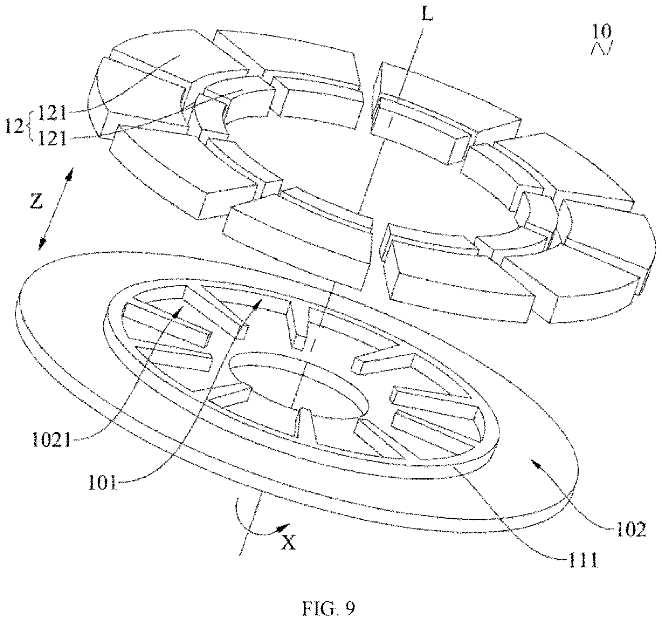

The mounting region 102 refers to a position defined by the mounting frame 11 for mounting the magnet steel 12. In some examples, as shown in FIGS. 7-9, the mounting region 102 may be a surface on the mounting frame 11 for mounting the magnet steel 12. In some examples, as shown in FIGS. 9 and 10, the mounting region 102 may also be a magnet steel groove 1021 on the mounting frame 11 for mounting the magnet steel 12.

The magnet steel 12 at same position in the circumferential direction X refers to one magnet steel 12. Thus, the one magnet steel 12 may be simultaneously mounted in the plurality of mounting regions 102 distributed in sequence in the radial direction Y That is, the magnet steel 12 may be mounted in regions in the radial direction Y to be mounted to the mounting frame 11.

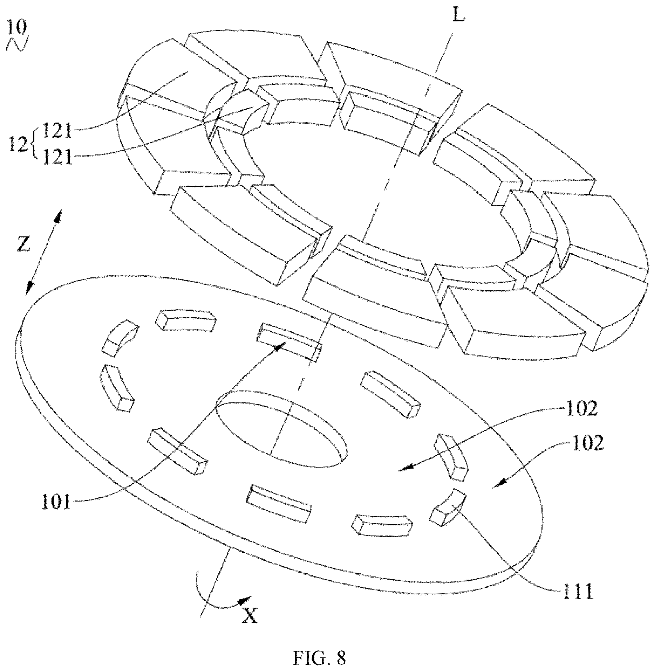

A part of the plurality of mounting regions 102 is provided with the above-mentioned limiting wall 101, and as shown in FIGS. 8 and 9, the mounting regions 102 may be one mounting region 102 or a plurality of mounting regions 102; alternatively, all of the plurality of mounting regions 102 may be provided with the limiting regions, as shown in FIGS. 7 and 10.

By dividing the mounting frame 11 into a plurality of mounting regions 102, and at least one of the mounting regions 102 being provided with a limiting wall 101, in one aspect, the magnet steel 12 may be separately mounted in regions in the radial direction Y, facilitating the improvement of the mounting reliability of the magnet steel 12 and the mounting frame 11 and facilitating the improvement of the tolerable stress of the mounting frame 11 to the magnet steel 12. Alternatively, on the basis that the magnet steel 12 is mounted in the plurality of mounting regions 102, the centrifugal movement of the magnet steel 12 in the radial direction Y may also be resisted by the limiting wall 101, so that the mounting reliability of the mounting frame 11 and the magnet steel 12 may be improved, to improve the tolerable stress of the mounting frame 11 to the magnet steel 12. The arrangement is such that the mounting frame 11 has a greater tolerable stress and meets a requirement of using the motor rotor 10 at a high rotation speed.

In some embodiments, referring to FIGS. 9 and 10, at least one of the mounting regions 102 is provided with a magnet steel groove 1021 which is provided with a limiting wall 101 as described above.

A part of the plurality of mounting regions 102 provided in the radial direction Y may be provided with the above-mentioned magnet steel groove 1021. As shown in FIG. 9, the number of the mounting regions 102 may be one or plural. Alternatively, all of the plurality of mounting regions 102 may be provided with the above-described limiting regions, as shown in FIG. 10.

When some of the mounting regions 102 are provided with the above-mentioned magnet steel groove 1021, and the number of the mounting regions 102 are plural, i.e., a plurality of the magnet steel grooves 1021 is provided. The plurality of magnet steel grooves 1021 may be continuously arranged in the radial direction Y, and a mounting region 102 without the magnet steel groove 1021 may be provided between two magnet steel grooves 1021 adjacent to each other in the radial direction Y

As shown in FIG. 9, as one example, the mounting frame 11 is divided into two mounting regions 102 arranged in sequence in the radial direction Y The mounting region 102 located at an inner side in the radial direction Y has the magnet steel groove 1021, and the mounting region 102 located at an outer side in the radial direction Y is not provided with the magnet steel groove 1021.

The outer side in the radial direction Y refers to a side near an outer edge of the mounting frame 11 in the radial direction Y For example, the mounting region 102 located at the outer side in the radial direction Y refers to the mounting region 102 of the two mounting regions 102 that is closer to the outer edge of the mounting frame 11 in the radial direction Y Accordingly, the inner side in the radial direction Y refers to a side near a central axis L of the mounting frame 11 in the radial direction Y For example, the mounting region 102 located at the inner side in the radial direction Y refers to the mounting region 102 of the two mounting regions 102 which is further away from the outer edge of the mounting frame 11 in the radial direction Y

Here, the magnet steel groove 1021 may be provided on one of sides of the mounting frame 11 in the axial direction Z, and the magnet steel groove 1021 is a groove, i.e., the mounting frame 11 has an opening 103 in communication with the magnet steel groove 1021 on one side in the axial direction Z. Alternatively, the magnet steel groove 1021 may be provided as a through groove penetrating the mounting frame 11 in the axial direction Z, i.e., two opposite sides of the mounting frame 11 in the axial direction Z are provided with openings 103 in communication with the magnet steel groove 1021. Alternatively, the magnet steel groove 1021 is a groove, and two opposite sides of the mounting frame 11 in the axial direction Z have the magnet steel groove 1021, i.e., two opposite sides of the mounting frame 11 in the axial direction Z have openings 103 in communication with the magnet steel groove 1021.

The magnet steel groove 1021 has a groove wall, and the wall surface of the magnet steel groove 1021 facing towards the central axis L of the mounting frame 11 in the radial direction Y is the limiting wall 101 of the magnet steel groove 1021, i.e., the limiting wall 101 of the corresponding mounting region 102.

By using the above-mentioned technical solution, the magnet steel 12 may be provided so that a part of the magnet steel 12 in the radial direction Y thereof is embedded in the magnet steel groove 1021, and another part of the magnet steel 12 is provided on the surface of the mounting frame 11 corresponding to the mounting region 102, and the magnet steel 12 may also be provided so that all parts of the magnet steel 12 in the radial direction Y thereof are embedded in the magnet steel groove 1021. The arrangement is such that in one aspect, the mounting means of the magnet steel 12 on the mounting frame 11 is very flexible and may be combined according to actual use requirements. Alternatively, it is possible to allow at least a part of the magnet steel 12 to be mounted in the magnet steel groove 1021 and to realize a binding action in the circumferential direction X by the magnet steel 12, which is advantageous in improving the mounting reliability of the magnet steel 12 and the mounting frame 11. A part of the magnet steel 12 corresponding to the magnet steel groove 1021 is partially or completely embedded in the magnet steel groove 1021 in the axial direction Z.

It should be additionally explained here that the mounting frame 11 is not provided with the magnet steel groove 1021, or the mounting frame 11 is provided with the magnet steel groove 1021, and the magnet steel groove 1021 is a groove. On this basis, two opposite sides of the mounting frame 11 in the axial direction Z may be divided into a plurality of mounting regions 102 distributed in sequence in the radial direction Y When the mounting frame 11 is provided with a magnet steel groove 1021, and the magnet steel groove 1021 is a through groove. On this basis, one of the sides of the mounting frame 11 in the axial direction Z may be divided into a plurality of mounting regions 102 distributed in sequence in the radial direction Y

In some embodiments, referring to FIG. 10, a plurality of mounting regions 102 adjacent to each other in the radial direction Y is provided with magnet steel grooves 1021, and the magnet steel grooves 1021 are provided with the limiting walls 101.

It might be appreciated that among the plurality of mounting regions 102 adjacent to each other in the radial direction Y, at least some of the mounting regions 102 are provided with the magnet steel grooves 1021, and the number of the at least some of the mounting regions 102 is plural. That is, a plurality of magnet steel grooves 1021 is continuously arranged in the radial direction Y such that the mounting frame 11 has a plurality of limiting walls 101 arranged at intervals in the radial direction Y The at least some of the mounting region 102 may be all or some of a plurality of mounting regions 102 distributed in sequence in the radial direction Y

By using the above-mentioned technical solution, the mounting frame 11 may resist the centrifugal movement of the magnet steel 12 in the radial direction Y by means of a plurality of limiting walls 101 distributed at intervals in the radial direction Y, so that the mounting frame 11 may distribute in the radial direction Y the force applied to the mounting frame 11 by the magnet steel 12 during rotation, i.e., the forced positions of the mounting frame 11 are distributed in the radial direction Y without being concentrated in one radial direction Y position. As such, it is possible to reduce the stress at each radial direction Y position of the mounting frame 11, so that the mounting frame 11 may endure a large stress, and thus the mounting reliability of the mounting frame 11 and the magnet steel 12 is high, which may satisfy a requirement of using the motor rotor 10 at a high rotation speed.

In some embodiments, referring to FIGS. 8 to 10, a separator 111 is provided between two mounting regions 102 adjacent to each other in the radial direction Y, and the wall surface of the separator 111 facing towards the central axis L of the mounting frame 11 is the limiting wall 101.

It might be appreciated that in the two mounting regions 102 adjacent to each other in the radial direction Y, the wall surface of the separator 111 facing towards the central axis L of the mounting frame 11 is the limiting wall 101 of the mounting region 102 located at the inner side in the radial direction Y

By providing the separator 111 between two mounting regions 102 adjacent to each other in the radial direction Y, the separator 111 may resist the centrifugal movement of the magnet steel 12 in the radial direction Y by the limiting wall 101 to improve the problem that the magnet steel 12 are thrown out during the rotation of the motor rotor 10. In addition, the separator 111 may separate the magnet steel 12, i.e., the magnet steel 12 may be divided into a plurality of portions distributed in sequence in the radial direction Y by the separation of the separator 111. As such, each part of the magnet steel 12 may be individually mounted at the mounting region 102, and in one aspect, allowing the magnet steel 12 to be mounted in regions is advantageous for improving the mounting reliability of the magnet steel 12 on the mounting frame 11. Alternatively, the mounting operation of the magnet steel 12 on the mounting frame 11 is facilitated. Alternatively, the mounting flexibility of the magnet steel 12 on the mounting frame 11 is made high, for example, a part of the magnet steel 12 may be mounted in the magnet steel groove 1021 and the other part may be mounted to the surface of the mounting frame 11 in the axial direction Z. In addition, the separator 111 may divide the magnet steel 12 into a plurality of parts distributed in sequence in the radial direction Y, so that the plurality of parts of the magnet steel 12 may respectively form eddy currents under the cooperation of the stator 20, i.e., form a plurality of small eddy currents, and eddy current loss of the magnet steel 12 may be reduced.

In addition, the separator 111 is provided between the two adjacent mounting regions 102 to resist the centrifugal movement of the magnet steel 12 in the radial direction Y by the limiting wall 101, so that the stress of the mounting frame 11 due to the centrifugal movement of the magnet steel 12 may be brought as close as possible to the central axis L of the mounting frame 11, which helps to increase the tolerable stress of the mounting frame 11 to the magnet steel 12, and thus helps to achieve a requirement of using the motor rotor 10 at a high rotation speed.

Each portion of the magnet steel 12 may include at least one block 121 referred to below.

In some embodiments, referring to FIG. 10, the above-mentioned separator 111 is provided between two magnet steel grooves 1021 adjacent to each other in the radial direction Y, and the wall surface of the separator 111 facing towards the central axis L of the mounting frame 11 is the limiting wall 101 of the magnet steel groove 1021 on the inner side of the separator 111 in the radial direction Y

It might be appreciated that the separator 111 separates two magnet steel grooves 1021 adjacent to each other in the radial direction Y, and the wall surface of the separator 111 facing towards the central axis L of the mounting frame 11 is the groove wall the magnet steel groove 1021 facing towards the central axis L of the mounting frame 11, i.e., the limiting wall 101 of the magnet steel groove 1021 located at the inner side in the radial direction Y

By using the above-described technical solution, the separator 111 separates two magnet steel grooves 1021 adjacent to each other in the radial direction Y As such, on the basis that at least a part of the magnet steel 12 may be embedded into the magnet steel groove 1021, the separator 111 may also block the centrifugal movement of the magnet steel 12 in the radial direction Y, so that the magnet steel 12 may be sufficiently firmly bound in the magnet steel groove 1021 to be firmly mounted to the mounting frame 11, to facilitate the effect of high rotation speed of the motor rotor 10. In addition, the separator 111 may separate the magnet steel 12 so that the magnet steel 12 is divided into a plurality of parts distributed in sequence in the radial direction Y, facilitating the mounting of the magnet steel 12, and facilitating the reduction of eddy current loss.

In some embodiments, as shown in FIGS. 7 and 8, a separator 111 may be provided between two adjacent mounting regions 102 where the magnet steel grooves 1021 are not provided.

In some embodiments, as shown in FIG. 9, in two adjacent mounting regions 102, one of the two adjacent mounting regions 102 is not provided with a magnet steel groove 1021, and another one of the two adjacent mounting region 102 is provided with a magnet steel groove 1021, and a separator 111 may also be provided between the two mounting regions 102. The mounting region 102 with the magnet steel groove 1021 may be located at the outer side of the mounting region 102 without the magnet steel groove 1021 in the radial direction Y, or may be located at the inner side of the mounting region 102 without the magnet steel groove 1021 in the radial direction Y When the mounting region 102 with the magnet steel groove 1021 is located at the inner side of the mounting region 102 without the magnet steel groove 1021 in the radial direction Y, the limiting wall 101 of the separator 111 is a groove wall the magnet steel groove 1021 facing towards the central axis L of the mounting frame 11.

In some embodiments, referring to FIGS. 6 and 7, the magnet steel 12 is provided on the surface of the mounting frame 11 in the axial direction Z, and the mounting frame 11 is provided with a limiting wall 101 located at the outer side of the magnet steel 12 in the radial direction Y

The magnet steel 12 is provided on one side surface of the mounting frame 11 in the axial direction Z; alternatively, the magnet steel 12 is provided on each of two opposite side surfaces of the mounting frame 11 in the axial direction Z.

On one side surface of the mounting frame 11 in the axial direction Z, a retainer 115 may be provided at a position close to the outer edge of the mounting frame 11 in the radial direction Y or at the outer edge of the mounting frame 11. The retainer 115 is located at the outer side of the magnet steel 12 in the radial direction Y, and the wall surface of the retainer 115 facing towards the central axis L of the mounting frame 11 in the radial direction Y is a limiting wall 101. The limiting wall 101 of the retainer 115 is used for resisting the centrifugal movement of the magnet steel 12 in the radial direction Y The retainer 115 may have a sleeve structure which is sleeved on the outer periphery of the plurality of magnet steels 12. A plurality of retainers 115 may be provided, and the plurality of retainers 115 is distributed in sequence in the circumferential direction X to surround the outer peripheries of the plurality of magnet steels 12. The retainers 115 and the other parts of the mounting frame 11 may have an integral connection structure or a split connection structure.

By using the above-mentioned technical solution, the mounting frame 11 is provided with a limiting wall 101 located at the outer side of the magnet steel 12 in the radial direction Y, so that the limiting wall 101 may block the magnet steel 12 inward in the radial direction Y to resist the centrifugal movement of the magnet steel 12 in the radial direction Y, thereby enabling the mounting frame 11 to have a high tolerable stress to the magnet steel 12, thereby enabling a requirement of using the motor rotor 10 at a high rotation speed.

In some embodiments, referring to FIGS. 6 and 7, among the plurality of mounting regions 102, the mounting region 102 on the outermost side in the radial direction Y is not provided with the magnet steel groove 1021, i.e., the mounting region 102 is provided with the magnet steel 12 by means of the surface of the mounting frame 11 in the axial direction Z. The above-mentioned retainer 115 may be provided at a position which is close to the outer edge of the mounting frame 11 in the radial direction Y or at the outer edge of the mounting frame 11 to resist the centrifugal movement of the magnet steel 12 in the radial direction Y located at the mounting region 102 on the outermost side in the radial direction Y by the limiting wall 101 of the retainer 115. The mounting region 102 on the outermost side in the radial direction Y refers to the mounting region 102 closest to the outer edge of the mounting frame 11 in the radial direction Y

In a solution in which the magnet steel 12 is provided on the surface of the mounting frame 11 in the axial direction Z, the mounting frame 11 may resist the centrifugal movement of the magnet steel 12 in the radial direction Y by the retainer 115, and also may resist the centrifugal movement of the magnet steel 12 in the radial direction Y by the separator 111 between the mounting region 102 and the mounting region 102. That is, each mounting region 102 may be provided with a limiting wall 101 such that the mounting frame 11 may resist the centrifugal movement of the magnet steel 12 in the radial direction Y by a plurality of limiting walls 101 distributed at intervals in the radial direction Y, so that the mounting frame 11 may distribute in the radial direction Y the force applied to the mounting frame 11 by the magnet steel 12 during the rotation, i.e., the forced positions of the mounting frame 11 are distributed in the radial direction Y without being concentrated in one radial direction Y position. As such, it is possible to reduce the stress at each radial direction Y position of the mounting frame 11, so that the mounting frame 11 may withstand a large stress, and thus the mounting reliability of the mounting frame 11 and the magnet steel 12 is high, which may satisfy a requirement of using the motor rotor 10 at a high rotation speed.

In some embodiments, referring to FIG. 10, among the plurality of mounting regions 102, the mounting region 102 closest to the outer edge of the mounting frame 11 in the radial direction Y has a magnet steel groove 1021, and the groove wall the magnet steel groove 1021 facing towards the central axis L of the mounting frame 11 is the limiting wall 101 of the corresponding mounting region 102.

In some embodiments, referring to FIGS. 7 and 10, each mounting region 102 is provided with limiting wall 101. The limiting walls 101 of a plurality of mounting regions 102 are distributed at intervals in the radial direction Y

It should be noted that for the mounting region 102 on the outermost side in the radial direction Y, when the mounting region 102 is provided with the magnet steel groove 1021, the groove wall the magnet steel groove 1021 facing towards the central axis L of the mounting frame 11 is the limiting wall 101 of the mounting region 102. When the mounting region 102 is not provided with the magnet steel groove 1021, the above-mentioned retainer 115 may be provided, and the wall surface of the retainer 115 facing towards the central axis L of the mounting frame 11 is the limiting wall 101 of the mounting region 102.

It should be noted that for the mounting region 102 that is not located at the outermost side in the radial direction Y, the wall surface of the separator 111 facing towards the central axis L of the mounting frame 11 is the limiting wall 101 of the mounting region 102 located at the inner side in the radial direction Y In addition, when the mounting region 102 has the magnet steel groove 1021, the wall surface of the magnet steel groove 1021 facing towards the central axis L of the mounting frame 11 is the limiting wall 101 of the mounting region 102, and is also the limiting wall 101 of the separator 111 between the mounting region 102 and the mounting region 102 located at the outer side in the radial direction Y

By using the above-mentioned technical solution, among a plurality of mounting regions 102 distributed in sequence in the radial direction Y, each mounting region 102 has a limiting wall 101. Thus, the mounting frame 11 has a plurality of limiting walls 101 distributed in sequence in the radial direction Y, so that the plurality of limiting walls 101 distributed in sequence in the radial direction Y may each limit the magnet steel 12, and may each resist the centrifugal movement of the magnet steel 12 in the radial direction Y That is, the mounting frame 11 may resist the centrifugal movement of the magnet steel 12 in the radial direction Y by means of a plurality of limiting walls 101 distributed at intervals in the radial direction Y, so that the mounting frame 11 may distribute in the radial direction Y the force applied to the mounting frame 11 by the magnet steel 12 during rotation, i.e., the forced positions of the mounting frame 11 are distributed in the radial direction Y without being concentrated in one radial direction Y position. As such, it is possible to reduce the stress at each radial direction Y position of the mounting frame 11, so that the mounting frame 11 may endure a large stress, and thus the mounting reliability of the mounting frame 11 and the magnet steel 12 is high, which may satisfy a requirement of using the motor rotor 10 at a high rotation speed.

In some embodiments, the magnet steel 12 has a profile matched with the limiting wall 101 of the magnet steel groove 1021.

It might be appreciated that the wall surface of the magnet steel 12 facing towards the limiting wall 101 is parallel to the limiting wall 101 so that the profile of the magnet steel 12 is matched with the limiting wall 101.

The arrangement is such that in the radial direction Y, the area of the wall surface of the magnet steel 12 facing towards the limiting wall 101 may be as large as possible, i.e., the magnet steel 12 has a larger area facing towards the limiting wall 101. As such, during the rotation of the motor rotor 10, the magnet steel 12 may be perfectly attached to and abut against the limiting wall 101, to improve the resistance of the limiting wall 101 to the centrifugal movement of the magnet steel 12 in the radial direction Y, thereby improving the mounting reliability of the magnet steel 12 on the mounting frame 11, and facilitating a requirement of using the motor rotor 10 at a high rotation speed.

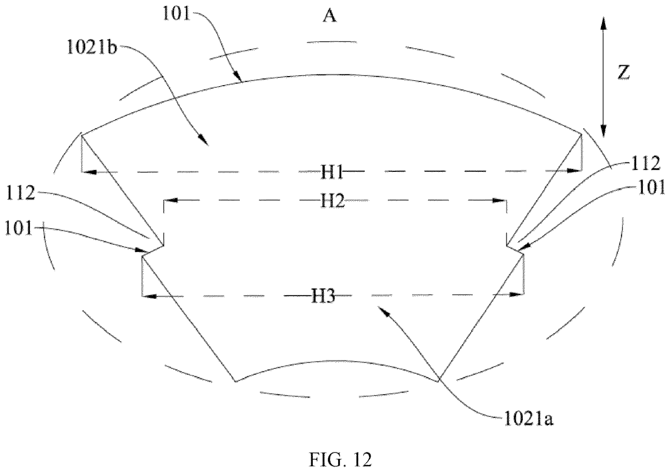

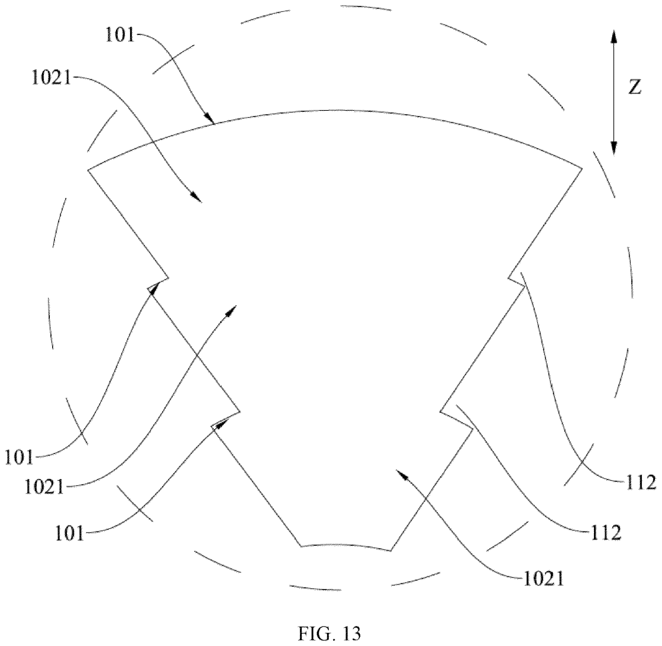

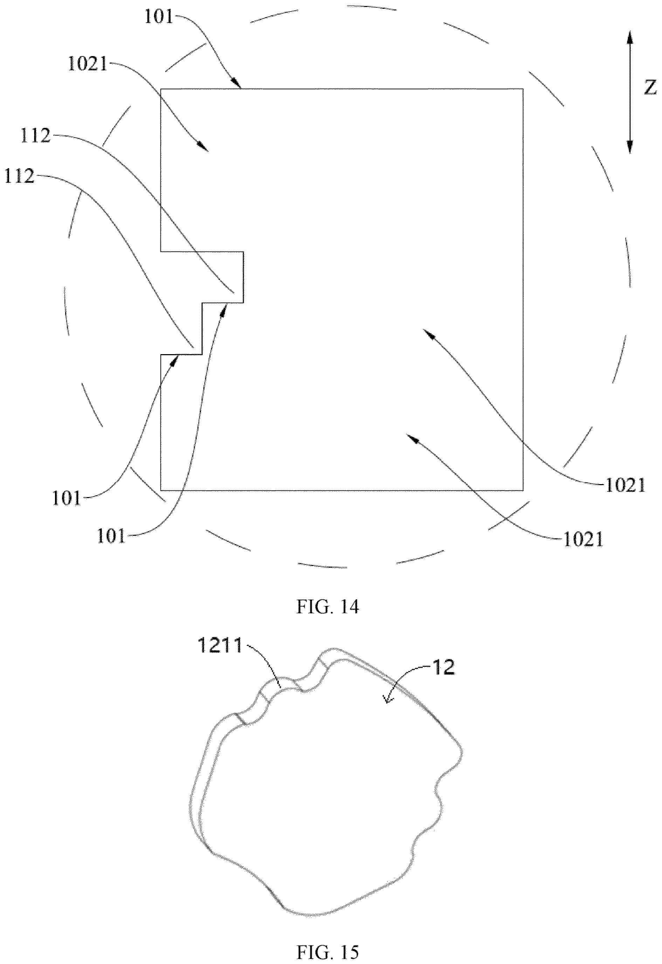

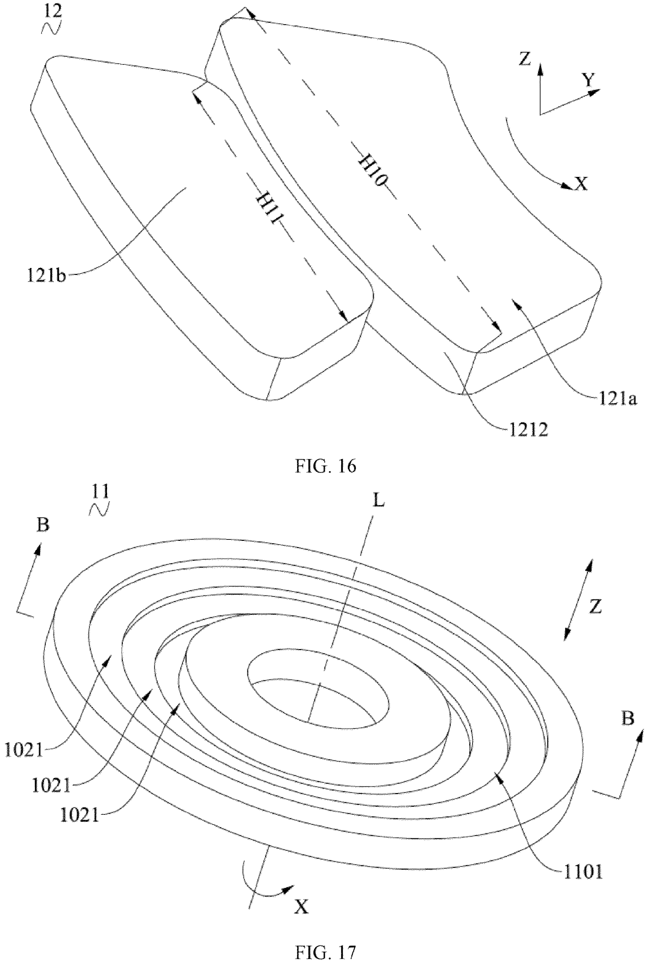

In some embodiments, referring to FIGS. 11-17, FIGS. 11-14, and FIG. 17 show structural schematic diagrams of the mounting frame 11 of the motor rotor 10 according to various embodiments of the present disclosure, respectively, and FIGS. 15 and 16 show schematic diagrams of the magnet steel 12 of the motor rotor 10 according to two embodiments of the present disclosure. Two magnet steel grooves 1021 adjacent to each other in the radial direction Y are in communication with each other in the radial direction Y, and the limiting wall 101 is provided at a position where the two magnet steel grooves 1021 adjacent to each other in the radial direction Y are in communication with each other.

It might be appreciated that the two magnet steel grooves 1021 adjacent to each other in the radial direction Y may be a first magnet steel groove 1021a and a second magnet steel groove 1021b, respectively. The second magnet steel groove 1021b is located on the outer side of the first magnet steel groove 1021a in the radial direction Y In addition, the inner side of the second magnet steel groove 1021b in the radial direction Y is opened in the radial direction Y to the outer side of the first magnet steel groove 1021a in the radial direction Y, to achieve the communication of the two magnet steel grooves 1021 adjacent to each other in the radial direction Y In addition, a limiting wall 101 is formed at the position where the two adjacent magnet steel grooves 1021 are in communication with each other, the limiting wall 101 is the limiting wall 101 of the magnet steel groove 1021 located on the inner side in the radial direction Y

By using the above-mentioned technical solution, two adjacent magnet steel grooves 1021 are in communication with each other in the radial direction Y, and the limiting wall 101 is formed at the position where the two adjacent magnet steel grooves 1021 are in communication with each other. The arrangement is such that the magnet steel 12 may also be provided at the position where the two adjacent magnet steel grooves 1021 are in communication with each other in the radial direction Y, which is beneficial to increase the occupied area of the magnet steel 12 on the side of the mounting frame 11 in the axial direction Z, i.e., a larger area of the surface of the magnet steel 12 in the axial direction Z may be retained, which may reduce the waste of the magnet steel 12, and facilitate the magnet steel 12 to drive the mounting frame 11 to rotate together under the action of the stator 20 to improve the output efficiency of outputting power through the rotation shaft 30.

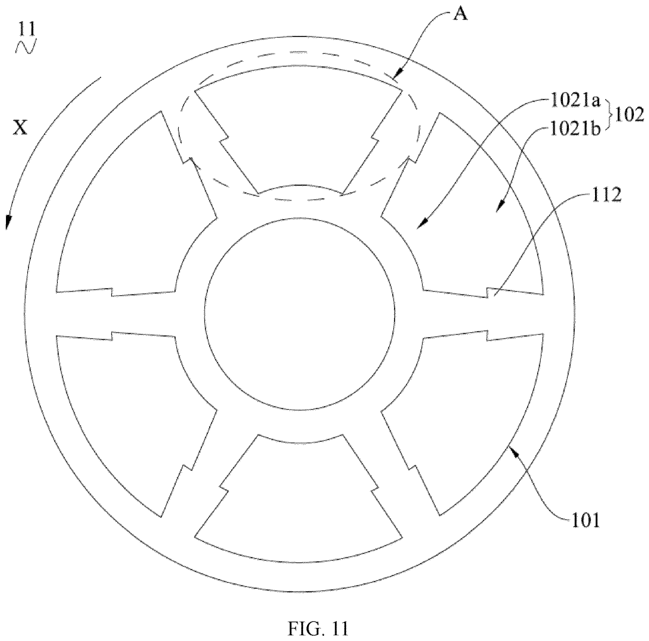

In some embodiments, referring to FIGS. 11-14, a first boss 112 is provided on a side wall in a circumferential direction X of a part connecting the two adjacent magnet steel grooves 1021, a wall surface of the first boss 112 facing towards the central axis L of the mounting frame 11 is the limiting wall 101.

It should be noted that since the magnet steel groove 1021 is provided on the side of the mounting frame 11 in the axial direction Z, one side or two opposite sides of the magnet steel groove 1021 in the circumferential direction X each have side walls. Thus, one side or the two opposite sides in the circumferential direction X of the part connecting the two adjacent magnet steel grooves 1021 also have side walls.

The first boss 112 is provided on the side wall in the circumferential direction X of the part connecting the two adjacent magnet steel grooves 1021, and it may be that the first boss 112 is provided on one of the side walls in the circumferential direction X of the part connecting the two adjacent magnet steel grooves 1021, as shown in FIG. 14. It is also possible that the first boss 112 is provided on each of two opposite side walls in the circumferential direction X of the part connecting the two adjacent magnet steel grooves 1021, as shown in FIGS. 11-13, to increase the area of the magnet steel 12 facing towards the limiting wall 101, and improve resistance of the limiting wall 101 to the centrifugal movement of the magnet steel 12 in the radial direction Y, to improve the mounting reliability of the magnet steel 12 and the mounting frame 11.

It might be appreciated that among the plurality of mounting regions 102 distributed in sequence in the radial direction Y, each of three or more adjacent mounting regions 102 is provided with a magnet steel groove 1021. Every two adjacent magnet steel grooves 1021 are in communication with each other in the radial direction Y, and one of the side walls in the circumferential direction X of the part connecting the two adjacent magnet steel grooves is provided with the first boss 112. On this basis, on one side wall in the circumferential direction X, the mounting frame 11 may form a plurality of first bosses 112 arranged in sequence in the radial direction Y

When the first boss 112 is provided on each of two opposite side walls in the circumferential direction X of the part connecting the two adjacent magnet steel grooves 1021, the limiting walls 101 located on the first bosses 112 of the two opposite side walls may be located at the same position in the radial direction Y Of course, the limiting walls 101 located on the first bosses 112 of the two opposite side walls may also be distributed at intervals in the radial direction Y, which helps to better distribute the stress of the mounting frame 11 in the radial direction Y to improve the resistance of the mounting frame 11 to the centrifugal movement of the magnet steel 12 in the radial direction Y

The first boss 112 refers to a portion protruding in the circumferential direction X from the part connecting the two adjacent magnet steel grooves 1021, and the first boss 112 may be a step structure, in particular, a square step or a zigzag step. The first bosses 112 may also be of an extension sheet shaped, block shaped, or other shaped structure. It should be noted that the step means a structure having two adjacent step surfaces, and one of the two step surfaces of the step is the limiting wall 101. As an example, when the first boss 112 is a square step, the two step surfaces are perpendicular to each other. As an example, when the first boss 112 is a zigzag step, the two step surfaces are not perpendicular.

The first boss 112 has a wall surface facing towards the central axis L of the mounting frame 11, and the wall surface of the first boss 112 facing towards the central axis L of the mounting frame 11 is the limiting wall 101 of the magnet steel groove 1021 located on the inner side in the radial direction Y

By using the above-mentioned technical solution, so that the first boss 112 is provided on the side wall in the circumferential direction X of the part connecting the two adjacent magnet steel grooves, the mounting frame 11 may resist the centrifugal movement of the magnet steel 12 in the radial direction Y by means of the limiting wall 101 on the first boss 112. As such, formation of the first boss 112 may be achieved at the same time as the formation of the magnet steel groove 1021 on the mounting frame 11, so that the formation of the first boss 112 and the limiting wall 101 thereon is very simple and easy to achieve.

In addition, the first boss 112 may be integrally connected to other portions of the mounting frame 11 or may be separately connected to other portions of the mounting frame 11.

In some embodiments, referring to FIG. 15 in conjunction with the other figures, the magnet steel 12 is of an integral structure and has a second boss 1211 matched with the limiting wall 101.

It should be noted that when a first boss 112 is provided on one of side walls in the circumferential direction X of the part connecting the two adjacent magnet steel grooves 1021, a second boss 1211 is provided on one side wall of the magnet steel 12 in the circumferential direction X. When the first boss 112 is provided on each of the two opposite side walls in the circumferential direction X of the part connecting the two adjacent magnet steel grooves 1021, a second boss 1211 is provided on each of the two opposite side walls of the magnet steel 12 in the circumferential direction X.

The profile of the second boss 1211 is matched with the limiting wall 101 of the first boss 112. In some embodiments, the wall surface of the second boss 1211 facing towards the limiting wall 101 of the first boss 112 is parallel to the limiting wall 101. That is, the wall surface of the second boss 1211 facing towards the limiting wall 101 of the first boss 112 has a larger area, in other words, the magnet steel 12 has a larger area facing towards the limiting wall 101 on the first boss 112.

The second boss 1211 is a portion protruding from one of or each of two opposite sides of the magnet steel 12 in the circumferential direction X.

The arrangement is such that the magnet steel 12 is integrally provided with the second boss 1211 matched with the limiting wall 101 of the first boss 112. During the rotation of the motor rotor 10, the limiting wall 101 on the first boss 112 may resist the centrifugal movement of the magnet steel 12 in the radial direction Y by abutting against the second boss 1211. Thus, the second boss 1211 has a high structural strength, so that the mounting frame 11 may better resist the centrifugal movement of the magnet steel 12 in the radial direction Y during the rotation under the condition that the limiting wall 101 abuts against the second boss 1211.

In some embodiments, referring to FIG. 16 in conjunction with the other figures, the magnet steel 12 includes a plurality of blocks 121, and at least a part of the plurality of blocks 121 is provided in sequence in the radial direction Y Among two blocks of the plurality of blocks 121 that are adjacent to each other in the radial direction Y, at least one side in the circumferential direction X of one block 121 located on an inner side in the radial direction Y extends in the circumferential direction X out of one block 121 located on an outer side in the radial direction Y, to form a third boss 1212 matched with the limiting wall 101.

It should be noted that when a first boss 112 is provided on one of side walls in the circumferential direction X of the part connecting the two adjacent magnet steel grooves 1021, among the two blocks of the plurality of blocks 121 that are adjacent to each other in the radial direction Y, one of sides in the circumferential direction X of the block 121 located on the inner side in the radial direction Y extends in the circumferential direction X out of the block 121 located on the outer side in the radial direction Y, so that the two adjacent blocks 121 have a dimension difference in the circumferential direction X to form a third boss 1212. Another one of sides in the circumferential direction X of the block 121 located on the inner side in the radial direction Y extends in the circumferential direction X out of or is below the block 121 located on the outer side in the radial direction Y, even more, the respective other sides in the circumferential direction X of the two adjacent blocks 121 may be flush.

It should also be noted that when the first boss 112 is provided on each of the two opposite side walls in the circumferential direction X of the part connecting two adjacent magnet steel grooves 1021, among the two blocks of the plurality of blocks 121 that are adjacent to each other in the radial direction Y, each of two opposite sides in the circumferential direction X of the block 121 located on the inner side in the radial direction Y extends in the circumferential direction X out of the block 121 located on the outer side in the radial direction Y That is, the two blocks 121 adjacent to each other in the radial direction Y may be a first block 121a and a second block 121b, respectively, wherein the second block 121b is located at the outer side in the radial direction Y of the first block 121a, and the dimension in the circumferential direction X of the outer side in the radial direction Y of the first block 121a is greater than the dimension in the circumferential direction X of the inner side in the radial direction Y of the second block 121b. As such, the above-mentioned third boss 1212 may be formed by a dimension difference in the circumferential direction X of the two blocks 121 adjacent to each other in the radial direction Y

The dimension in the circumferential direction X of the outer side in the radial direction Y of the first block 121a is a dimension H10, and the dimension in the circumferential direction X of the inner side in the radial direction Y of the second block 121b is a dimension H11.

A portion of the block 121 located on the inner side in the radial direction Y that extends in the circumferential direction X out of the block 121 located on the outer side in the radial direction Y may be a third boss 1212.

The profile of the third boss 1212 is matched with the limiting wall 101 of the first boss 112. Specifically, a wall surface of the third boss 1212 facing towards the limiting wall 101 on the first boss 112 is parallel to the limiting wall 101, so that the area of the wall surface of the third boss 1212 facing towards the limiting wall 101 on the first boss 112 is as large as possible, thereby making the magnet steel 12 have a larger area facing towards the limiting wall 101 on the first boss 112.

By the two blocks 121 adjacent to each other in the radial direction Y having a dimension difference in the circumferential direction X to form a third boss 1212, during rotation of the motor rotor 10, the limiting wall 101 of the first boss 112 may resist the centrifugal movement of the magnet steel 12 in the radial direction Y by abutting against the third boss 1212. In addition, the magnet steel 12 is divided into a plurality of blocks 121, so that the magnet steel 12 is flexibly assembled in the magnet steel groove 1021, and the third boss 1212 is matched with the limiting wall 101 on the first boss 112.

By using the above-mentioned technical solution, the magnet steel 12 is integrally provided and the second boss 1211 is provided, or the magnet steel 12 is provided with a plurality of blocks 121 and the third boss 1212 is formed by the dimension difference in the circumferential direction X, to enable the magnet steel 12 to be matched with the limiting walls 101, to improve the resistance of the limiting walls 101 to the centrifugal movement of the magnet steel 12 in the radial direction Y .

In some embodiments, referring to FIGS. 11-13, the two magnet steel grooves 1021 adjacent to each other in the radial direction Y are a first magnet steel groove 1021a and a second magnet steel groove 1021b, and the second magnet steel groove 1021b is located on an outer side of the first magnet steel groove 1021a in the radial direction Y A dimension in the circumferential direction X of the outer side in the radial direction Y of the second magnet steel groove 1021b is greater than the dimension in the circumferential direction X of the inner side in the radial direction Y of the second magnet steel groove 1021b, and two opposite sides in the circumferential direction X of the outer side in the radial direction Y of the first magnet steel groove 1021a extend in the circumferential direction X out of the inner side in the radial direction Y of the second magnet steel groove 1021b, to form the first boss 112.

It might be appreciated that in the distribution direction of the second magnet steel groove 1021b and the first magnet steel groove 1021a, i.e., in a direction inward in the radial direction Y, the dimension in the circumferential direction X of the second magnet steel groove 1021b is reduced. Specifically, the dimension in the circumferential direction X of the outer side in the radial direction Y of the second magnet steel groove 1021b is substantially the dimension H1, the dimension in the circumferential direction X of the inner side in the radial direction Y of the second magnet steel groove 1021b is substantially the dimension H2, and the dimension H1 is greater than the dimension H2. On this basis, the first magnet steel groove 1021a and the second magnet steel groove 1021b are connected and combined to form a groove in the shape of a central girdling design in the radial direction Y That is, in view in the axial direction Z, the second magnet steel groove 1021b may have a substantially trapezoidal, fan-shaped, or the like.

The dimension in the circumferential direction X of the outer side in the radial direction Y of the first magnet steel groove 1021a is greater than the dimension in the circumferential direction X of the inner side in the radial direction Y of the second magnet steel groove 1021b, and the two opposite sides in the circumferential direction X of the outer side in the radial direction Y of the first magnet steel groove 1021a extend in the circumferential direction X out of the inner side in the radial direction Y of the second magnet steel groove 1021b, so that the first boss 112 is formed on each of the two opposite sides in the circumferential direction X of the part connecting the first magnet steel groove 1021a and the second magnet steel groove 1021b. The dimension in the circumferential direction X of the outer side in the radial direction Y of the first magnet steel groove 1021a is substantially a dimension H3 which is greater than the dimension H2.

The arrangement is such that in one aspect, the dimension in the circumferential direction X of the second magnet steel groove 1021b is gradually increased outwardly in the radial direction Y, which facilitates the laying of the second magnet steel groove 1021b on the mounting frame 11 as much as possible, helping to increase the area occupied by the magnet steel 12 on the side of the mounting frame 11 in the axial direction Z. That is, a large area of the surface of the magnet steel 12 in the axial direction Z may be retained, so that the magnet steel 12 may rotate the mounting frame 11 together under the action of the stator 20 to improve the output efficiency of outputting power through the rotation shaft 30. Alternatively, a limiting wall 101 is formed on each of the two opposite sides in the circumferential direction X of the part connecting the first magnet steel groove 1021a and the second magnet steel groove 1021b, which helps to improve the resistance of the mounting frame 11 to the centrifugal movement of the magnet steel 12 in the radial direction Y, and helps to improve the stability of the magnet steel 12 in the magnet steel groove 1021.

In some embodiments, referring to FIGS. 17-20 in conjunction with the other figures, FIGS. 17-20 show schematic diagrams of a mounting frame 11 for a motor rotor 10 provided by four embodiments of the present disclosure. A plurality of magnet steel grooves 1021 arranged in the radial direction Y forms a first step structure 1101 in an axial direction Z, and a wall surface of the first step structure 1101 facing towards a central axis L of the mounting frame 11 is a limiting wall 101.

The first step structure 1101 refers to a step-shaped structure. The first step structure 1101 may include at least one-stage step, and the step refers to a structure having two adjacent step surfaces at an angle greater than 0 deg. to each other. The step may be a square step, a zigzag step, or a step of another shape. For the square step, two adjacent step surfaces may be perpendicular to each other. For the zigzag step, two adjacent step surfaces may not be perpendicular.

For the first step structure 1101 formed in the axial direction Z, one of the step surfaces of the one-stage step generally faces the central axis L of the mounting frame 11 in the radial direction Y, and the step surface is a limiting wall 101 of the magnet steel groove 1021 located on the inner side in the radial direction Y; and the other step surface is provided generally in the axial direction Z.

When the first step structure 1101 formed in the axial direction Z includes multi-stage steps, as shown in FIGS. 17 to 20, the multi-stage steps are arranged in sequence in the axial direction Z. On this basis, the limiting walls 101 formed by the multi-stage steps are distributed in sequence in the axial direction Z, and at least a part of the limiting walls 101 formed by the multi-stage steps are distributed at intervals in the radial direction Y

In the first step structure 1101, the one-stage step is formed on a side wall in the axial direction Z of a part connecting two magnet steel grooves 1021 adjacent to each other in the radial direction Y, and the limiting wall 101 of the step is the limiting wall 101 of the magnet steel groove 1021 located on the inner side in the radial direction Y

By using the above-mentioned technical solution, a plurality of magnet steel grooves 1021 arranged in the radial direction Y forms a first step structure 1101 in the axial direction Z, i.e., at least a part of the mounting frame 11 is the first step structure 1101, and the wall surface of the first step structure 1101 facing towards the central axis L of the mounting frame 11 is the limiting wall 101, so that the mounting frame 11 may resist the centrifugal movement of the magnet steel 12 in the radial direction Y by the limiting wall 101 on the first step structure 1101. The arrangement of the first step structure 1101 is such that the first step structure 1101 has at least two limiting walls 101 distributed in sequence in the radial direction Y In this manner, the mounting frame 11 may resist the centrifugal movement of the magnet steel 12 in the radial direction Y at a plurality of positions of in the radial direction Y, facilitating stress distribution on the mounting frame 11, to improve the resistance of the mounting frame 11 to the centrifugal movement of the magnet steel 12 in the radial direction Y, which helps to meet a requirement of using the motor rotor 10 at a high rotation speed.

In addition, since the first step structure 1101 is formed in the axial direction Z by a plurality of magnet steel grooves 1021 arranged in the radial direction Y, among the plurality of magnet steel grooves 1021 provided in sequence in the radial direction Y, a dimension in the axial direction Z of the magnet steel groove 1021 located on the inner side in the radial direction Y is greater than the dimension in the axial direction Z of the magnet steel groove 1021 located on the outer side in the radial direction Y That is, the dimensions in the axial direction Z of the plurality of magnet steel grooves 1021 are reduced in sequence outwardly in the radial direction Y Thus, in one aspect, the center of gravity of the magnet steel 12 comes closer towards a central axis L of the mounting frame 11, which helps to improve the structural stability of the motor rotor 10 as a whole. Alternatively, the dimension in the axial direction Z of the mounting frame 11 is increased outwardly in the radial direction Y, which contributes to an increase in the tolerable stress of the part of the mounting frame 11 on the outer side in the radial direction Y and to an increase in the resistance of the entire mounting frame 11 to the centrifugal movement of the magnet steel 12 in the radial direction Y, so that a requirement of using the motor rotor 10 at a high rotation speed may be met.

In some embodiments, referring to FIGS. 17-19 in conjunction with the other figures, in the axial direction Z, distances in the radial direction Y of at least a part of the limiting walls 101 with respect to the central axis L of the mounting frame 11 are gradually increased.

It might be appreciated that in the first step structure 1101 formed by the plurality of magnet steel grooves 1021, the plurality of limiting walls 101 are distributed in sequence in the axial direction Z. As such, in the axial direction Z towards one side, distances in the radial direction Y of at least a part of the limiting walls 101 distributed in sequence in the axial direction Z with respect to the central axis L of the mounting frame 11 are gradually increased.

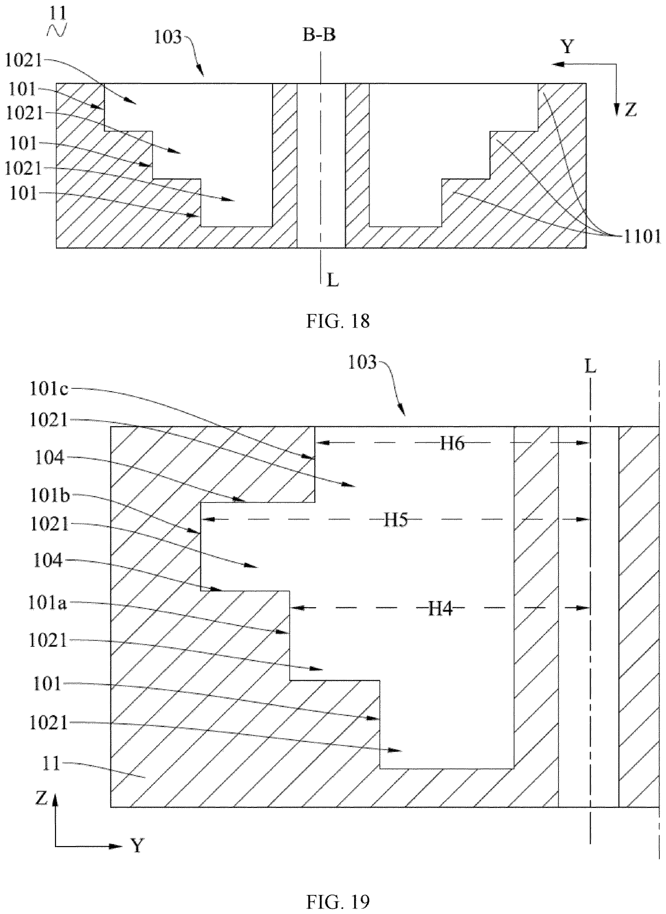

As shown in FIG. 19, a distance in the radial direction Y of one of the limiting walls 101 with respect to the central axis L of the mounting frame 11 is dimension H4, and distances in the radial direction Y of the other limiting walls 101 with respect to the central axis L of the mounting frame 11 are also provided in this same way.

In some possible designs, as shown in FIGS. 17 and 18, in the axial direction Z towards one side, distances in the radial direction Y of all of the limiting walls 101 with respect to the central axis L of the mounting frame 11 are gradually increased. In some possible designs, as shown in FIG. 19, in the axial direction Z toward one side, distances in the radial direction Y of a part of the limiting walls 101 with respect to the central axis L of the mounting frame 11 are gradually increased.

By using the solution described above, distances in the radial direction Y of at least a part of the limiting walls 101 with respect to the central axis L of the mounting frame 11 are gradually increased, when the magnet steel 12 is matched with the magnet steel groove 1021, the dimension in the axial direction Z of the magnet steel 12 may be reduced with greater amplitude outwardly in the radial direction Y As such, it is advantageous for the center of the magnet steel 12 to be offset towards the central axis L of the mounting frame 11 and, correspondingly, for the dimension in the axial direction Z of the part of the mounting frame 11 on the outer side in the radial direction Y to be increased, so that the resistance of the mounting frame 11 to the centrifugal movement of the magnet steel 12 in the radial direction Y is improved.

It should be noted that at least one side of the mounting frame 11 in the axial direction Z has an opening 103 in communication with the magnet steel groove 1021. The arrangement is such that magnetic field line generated by the motor rotor 10 may pass through the magnet steel 12 in the magnet steel groove 1021 in the axial direction Z.

As shown in FIGS. 17 and 18, in the axial direction Z towards one side, distances in the radial direction Y of all of the limiting walls 101 with respect to the central axis L of the mounting frame 11 are gradually increased. The arrangement is such that the opening 103 of the mounting frame 11 in the axial direction Z may be as large as possible, thus facilitating the magnet steel 12 to be mounted in the magnet steel groove 1021.

In some embodiments, referring to FIG. 19 in conjunction with the other figures, the distance in the radial direction Y of at least one limiting wall 101 with respect to the central axis L of the mounting frame 11 is greater than the distance in the radial direction Y of two limiting walls 101, which are adjacent to each other in the axial direction Z, with respect to the central axis L of the mounting frame 11.

It should be noted that in the first step structure 1101 formed by the plurality of magnet steel grooves 1021, the plurality of limiting walls 101 on the first step structure 1101 are distributed in sequence in the axial direction Z, and the number of limiting walls 101 distributed in sequence in the axial direction Z is at least three.

As shown in FIG. 19, three limiting walls 101 adjacent to each other in the axial direction Z may be defined as a first limiting wall 101a, a second limiting wall 101b, and a third limiting wall 101c, a distance in the radial direction Y of the first limiting wall 101a with respect to the central axis L of the mounting frame 11 is dimension H4, a distance in the radial direction Y of the second limiting wall 101b with respect to the central axis L of the mounting frame 11 is dimension H5, and a distance in the radial direction Y of the third limiting wall 101c with respect to the central axis L of the mounting frame 11 is dimension H6. Dimension H5 is greater than dimension H4 or dimension H6.

By using the above-mentioned technical solution, the first step structure 1101 has a fourth limiting wall 104 adjacent to the first limiting wall 101a, and also has a fourth limiting wall 104 adjacent to the third limiting wall 101c, wherein the two fourth limiting walls 104 are distributed at intervals in the axial direction Z, and are respectively two opposite side walls in the axial direction Z of the magnet steel groove 1021 where the second limiting wall 101b is located. The arrangement is such that at least a part of the magnet steels 12 may be located in the axial direction Z between the two fourth limiting walls 104 distributed at intervals, i.e., at least a part of the magnet steels 12 may be located in the axial direction Z within at least one magnet steel groove 1021. As such, the relative limit strength of the magnet steel groove 1021 and the mounting frame 11 in the axial direction Z may be improved, which helps to improve the mounting reliability of the mounting frame 11 and the magnet steel 12, and further helps to meet a requirement of using the motor rotor 10 at a high rotation speed.

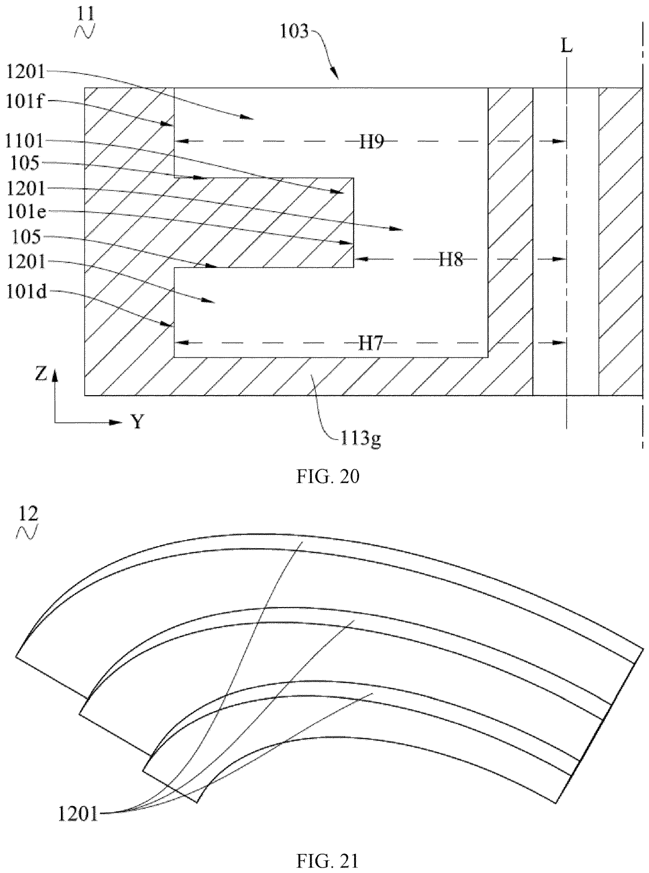

In some embodiments, referring to FIG. 20 in conjunction with the other figures, the distance in the radial direction Y of at least one limiting wall 101 with respect to the central axis L of the mounting frame 11 is smaller than the distances in the radial direction Y of two limiting walls 101, which are adjacent to each other in the axial direction Z, with respect to the central axis L of the mounting frame 11.

It should be noted that in the first step structure 1101 formed by the plurality of magnet steel grooves 1021, the plurality of limiting walls 101 on the first step structure 1101 are distributed in sequence in the axial direction Z, and the number of limiting walls 101 distributed in sequence in the axial direction Z is at least three.

As shown in FIG. 20, three limiting walls 101 adjacent to each other in the axial direction Z may be defined as a fifth limiting wall 101d, a sixth limiting wall 101e, and a seventh limiting wall 101f, a distance in the radial direction Y of the fifth limiting wall 101d with respect to the central axis L of the mounting frame 11 is dimension H7, a distance in the radial direction Y of the sixth limiting wall with respect to the central axis L of the mounting frame 11 is dimension H8, and a distance in the radial direction Y of the seventh limiting wall 101f with respect to the central axis L of the mounting frame 11 is dimension H9. Dimension H8 is smaller than dimension H7 or dimension H9.

By using the above-mentioned technical solution, the first step structure 1101 has two eighth limiting walls 105 adjacent to the sixth limiting wall 101e, and the two eighth limiting walls 105 are respectively located on two opposite sides of the sixth limiting wall 101e in the axial direction Z. The arrangement is such that a part of the magnet steels 12 may be located on a side of the first eighth limiting wall 105 facing away from the second eighth limiting wall 105 in the axial direction Z, and the other magnet steels 12 may be located on a side of the second eighth limiting wall 105 facing away from the first eighth limiting wall 105 in the axial direction Z. The arrangement is such that the relative limit of the magnet steel groove 1021 and the mounting frame 11 in the axial direction Z may be achieved, which helps to improve the mounting reliability of the mounting frame 11 and the magnet steel 12, and further helps to meet a requirement of using the motor rotor 10 at a high rotation speed.

In some embodiments, referring to FIG. 20 in conjunction with the other figures, the mounting frame 11 further includes a base body 113g, and the first step structure 1101 is provided on the base body 113g. A distance in the radial direction Y of the at least one limiting wall 101 with respect to the central axis L of the mounting frame 11 is greater than a distance in the radial direction Y of a limiting wall 101, which is away from the base body 113g in the axial direction Z, with respect to the central axis L of the mounting frame 11.

It should be noted that in the first step structure 1101 formed by the plurality of magnet steel grooves 1021, the plurality of limiting walls 101 on the first step structure 1101 are distributed in sequence in the axial direction Z, and the number of limiting walls 101 distributed in sequence in the axial direction Z is at least two.

As shown in FIG. 20, one side of the base body 113g in the axial direction Z is provided with a first step structure 1101. Alternatively, each of two opposite sides of the base body 113g in the axial direction Z is provided with the first step structure 1101.

The base body 113g and the first step structure 1101 may be in integral connection or split connection. If the mounting frame 11 further has other portions, the base body 113g and the first step structure 1101 may be in integral connection or split connection with the other portions of the mounting frame 11.

As shown in FIG. 20, two limiting walls 101 adjacent to each other in the axial direction Z are defined as a fifth limiting wall 101d and a sixth limiting wall 101e, and in the axial direction Z, the fifth limiting wall 101d is located between the sixth limiting wall 101e and the base body 113g. That is, with respect to the fifth limiting wall 101d, the limiting wall 101 facing away from the base body 113g in the axial direction Z is the sixth limiting wall 101e. A distance in the radial direction Y of the fifth limiting wall 101d with respect to the central axis L of the mounting frame 11 is dimension H7, and a distance in the radial direction Y of the sixth wall with respect to the central axis L of the mounting frame 11 is dimension H8. The dimension H8 is smaller than the dimension H7.

By using the above-mentioned technical solution, the first step structure 1101 has an eighth limiting wall 105 adjacent to the sixth limiting wall 101e, wherein the eighth limiting wall 105 is provided between the fifth limiting wall 101d and the sixth limiting wall 101e, and is distributed at intervals from the base body 113g in the axial direction Z. The arrangement is such that the wall surfaces of the eighth limiting wall 105 and the base body 113g facing towards the eighth limiting wall 105 in the axial direction Z may be two opposite side walls in the axial direction Z of the magnet steel groove 1021 in which the fifth limiting wall 101d is located, respectively. The arrangement is such that at least a part of the magnet steels 12 may be located in the axial direction Z between the base body 113g and the eighth limiting wall 105, i.e., at least a part of the magnet steels 12 may be located in the axial direction Z within at least one magnet steel groove 1021. As such, the relative limit strength of the magnet steel groove 1021 and the mounting frame 11 in the axial direction Z may be improved, which helps to improve the mounting reliability of the mounting frame 11 and the magnet steel 12, and further helps to meet a requirement of using the motor rotor 10 at a high rotation speed. In addition, on the basis that the mounting frame 11 is provided with only two limiting walls 101 distributed in sequence in the radial direction Y, the stress of the mounting frame 11 may be distributed in the radial direction Y, and at the same time, the mounting frame 11 and the magnet steel 12 are limited in the axial direction Z to improve the mounting reliability of the mounting frame 11 and the magnet steel 12, which may be applied to the mounting frame 11 having a small thickness and being difficult to provide with a plurality of limiting walls 101 in the axial direction Z.

In some embodiments, referring to FIG. 21 in conjunction with the other figures, FIG. 21 illustrates a schematic diagram showing a magnet steel 12 of a motor rotor 10 provided by some embodiments of the present disclosure. The magnet steel 12 is of an integral structure, in addition, the magnet steel 12 forms a second step structure 1201, the second step structure 1201 being matched with the limiting wall 101.

The second step structure 1201 refers to a step-like structure. The second step structure 1201 may include at least one-stage step, the step being a structure having two adjacent step surfaces at an angle greater than 0 deg. to each other. The step may be a square step, a zigzag step, or a step of another shape. For the square step, two adjacent step surfaces may be perpendicular to each other. For the zigzag step, two adjacent step surfaces may not be perpendicular.

The second step structure 1201 may be formed on one of sides of the magnet steel 12 in the axial direction Z, or may be formed on two opposite sides of the magnet steel 12 in the axial direction Z. As long as the second step structure 1201 is formed by the magnet steel 12, it may be matched with the limiting wall 101.

The profile of the second step structure 1201 is matched with the limiting wall 101 of the first step structure 1101. Specifically, the second step structure 1201 has a wall surface facing towards the limiting wall 101 of the first step structure 1101, and the wall surface of the second step structure 1201 facing towards the limiting wall 101 of the first step structure 1101 is parallel to the corresponding limiting wall 101. That is, the wall surface of the second step structure 1201 facing towards the limiting wall 101 of the first step structure 1101 has a larger area, in other words, the magnet steel 12 has a larger area facing towards the limiting wall 101 of the first step structure 1101.

The arrangement is such that the magnet steel 12 is integrally provided with a second step structure 1201 matched with the limiting wall 101 of the first step structure 1101, and during the rotation of the motor rotor 10, the limiting wall 101 of the first step structure 1101 may resist the centrifugal movement of the magnet steel 12 in the radial direction Y by abutting against the second step structure 1201. Thus, the second step structure 1201 has a high structural strength, so that the mounting frame 11 may better resist the centrifugal movement of the magnet steel 12 in the radial direction Y under the condition that the limiting wall 101 abuts against the second step structure 1201 during the rotation.

In some embodiments, the second step structure 1201 also has a wall surface generally in the axial direction Z. The wall surface of the second step structure 1201 in the axial direction Z may also be matched with the step surface of the first step structure 1101 which is not the limiting wall 101, specifically, the wall surface of the second step structure 1201 in the axial direction Z may also be parallel to the step surface of the first step structure 1101 which is not the limiting wall 101, to attach the first step structure 1101 to the second step structure 1201. This arrangement is such that the overall profile of the magnet steel 12 matches with the internal shape of the magnet steel 12.This helps to improve the reliability of the magnet steel 12 embedded in the magnet steel groove 1021.

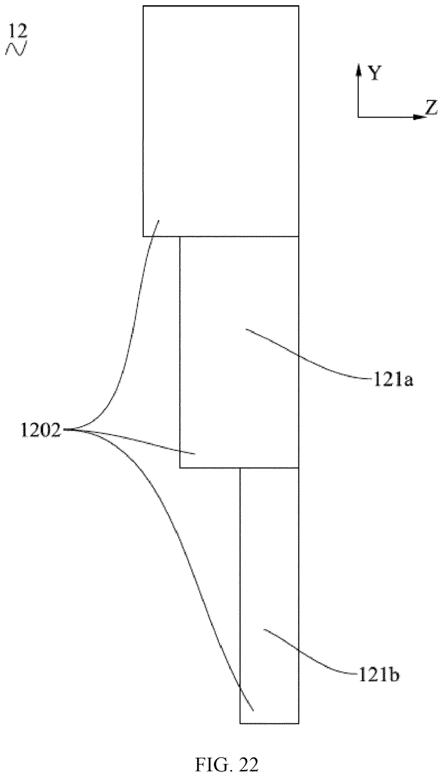

In some embodiments, referring to FIG. 22 in conjunction with the other figures, FIG. 22 illustrates a schematic diagram showing a magnet steel 12 of a motor rotor 10 provided by some embodiments of the present disclosure. The magnet steel 12 includes a plurality of blocks 121, and at least a part of the plurality of blocks 121 are provided in sequence in the radial direction Y. Among the plurality of blocks 121 adjacent to each other in the radial direction Y, at least one side in the axial direction Z of a block 121 located on the inner side in the radial direction Y extends in the axial direction Z out of a block 121 located on the outer side in the radial direction Y, to form a third step structure 1202. The third step structure 1202 is matched with the limiting wall 101.

It should be noted that two blocks 121 adjacent to each other in the radial direction Y may be provided as: one side in the axial direction Z of the block 121 located on the inner side in the radial direction Y extends in the axial direction Z out of the block 121 located on the outer side in the radial direction Y, so that the two adjacent blocks 121 have a dimension difference in the axial direction Z. On this basis, the other side in the axial direction Z of the block 121 located on the inner side in the radial direction Y may also beyond in the axial direction Z out of or be below the block 121 located on the outer side in the radial direction Y, and even the respective other sides of the two adjacent blocks 121 in the axial direction Z may be flush.

It should also be noted that the two blocks 121 adjacent to each other in the radial direction Y may also be provided as: the two opposite sides in the axial direction Z of the block 121 located on the inner side in the radial direction Y extend in the axial direction Z out of the block 121 located on the outer side in the radial direction Y That is, the two blocks 121 adjacent to each other in the radial direction Y may be a first block 121a and a second block 121b, respectively, wherein the second block 121b is located at the outer side in the radial direction Y of the first block 121a, and the dimension in the axial direction Z of the outer side in the radial direction Y of the first block 121a is greater than the dimension in the axial direction Z of the inner side in the radial direction Y of the second block 121b. So that the two adjacent blocks 121 have a dimension difference in the axial direction Z.

It should also be noted that among the plurality of blocks 121 adjacent to each other in the radial direction Y, every two adjacent blocks 121 may have a height difference such that the plurality of blocks 121 forms the third step structure 1202 described above.

The profile of the third step structure 1202 is matched with the limiting wall 101 of the first step structure 1101. Specifically, the third step structure 1202 has a wall surface facing towards the limiting wall 101 of the first step structure 1101, and the wall surface of the third step structure 1202 facing towards the limiting wall 101 of the first step structure 1101 is parallel to the corresponding limiting wall 101. That is, the wall surface of the third step structure 1202 facing towards the limiting wall 101 on the first step structure 1101 has a larger area, in other words, the magnet steel 12 has a larger area facing towards the limiting wall 101 of the first step structure 1101.

By the plurality of blocks 121 adjacent to each other in the radial direction Y having a dimension difference in the axial direction Z to form a third step structure 1202, during rotation of the motor rotor 10, the limiting wall 101 of the first step structure 1101 may resist the centrifugal movement of the magnet steel 12 in the radial direction Y by abutting against the third step structure 1202. In addition, the magnet steel 12 is divided into a plurality of blocks 121, so that the magnet steel 12 is flexibly assembled in the magnet steel groove 1021 and the third step structure 1202 is matched with the limiting wall 101 of the first step structure 1101.

As an example, in order to be matched with the first step structure 1101 shown in FIGS. 17 and 18, in the axial direction Z towards one side, distances in the radial direction Y of all of the limiting walls 101 with respect to the central axis L of the mounting frame 11 are gradually increased. Correspondingly, the dimension in the axial direction Z of the magnet steel 12 is reduced outwardly in the radial direction Y.

In some embodiments, the third step structure 1202 also has a wall surface generally in the axial direction Z. The wall surface of the third step structure 1202 in the axial direction Z may also be matched with the step surface of the first step structure 1101 which is not the limiting wall 101, specifically, the wall surface of the third step structure 1202 in the axial direction Z may also be parallel to the step surface of the first step structure 1101 which is not the limiting wall 101, to attach the first step structure 1101 to the second step structure 1201. This arrangement is such that the overall profile of the magnet steel 12 matches with the internal shape of the magnet steel 12 and helps to improve the reliability of the magnet steel 12 embedded in the magnet steel groove 1021.

By using the above-mentioned technical solution, the magnet steel 12 is integrally provided and the second step structure 1201 is formed, or the magnet steel 12 is provided with a plurality of blocks 121 and the third step structure 1202 is formed by a dimension difference of the magnet steel 12 in the axial direction Z, so that the magnet steel 12 may be matched with the limiting wall 101 to improve the resistance of the limiting wall 101 to the centrifugal movement of the magnet steel 12 in the radial direction Y

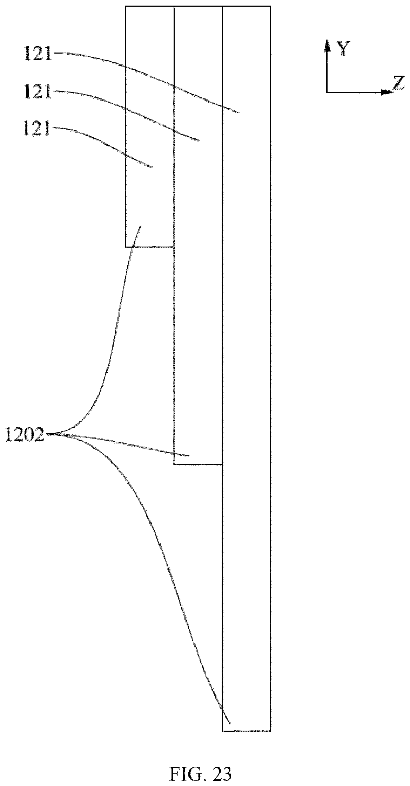

In some embodiments, referring to FIG. 23 in conjunction with the other figures, FIG. 23 illustrates a schematic diagram showing a magnet steel 12 provided by some embodiments of the present disclosure. The magnet steel 12 may also include a plurality of blocks 121, at least a part of the plurality of blocks 121 are arranged in sequence in the axial direction Z.

It should be noted that the plurality of limiting walls 101 on the first step structure 1101 are distributed in sequence in the axial direction Z. When at least a part of the plurality of blocks 121 are arranged in sequence in the axial direction Z, at least one of the blocks 121 distributed in the axial direction Z may correspond to one limiting wall 101, i.e., the one limiting wall 101 may resist the centrifugal movement in the radial direction Y of the at least one of the blocks 121 distributed in sequence in the axial direction Z. It should also be noted that among the plurality of limiting walls 101 distributed in sequence in the axial direction Z, generally one limiting wall 101 corresponds to one magnet steel groove 1021. The arrangement is such that at least one of the blocks 121 may be positioned within one magnet steel groove 1021 to facilitate flexible positioning of the magnet steel 12 within the magnet steel groove 1021.

In some embodiments, the mounting frame 11 is of an integrally formed structure.

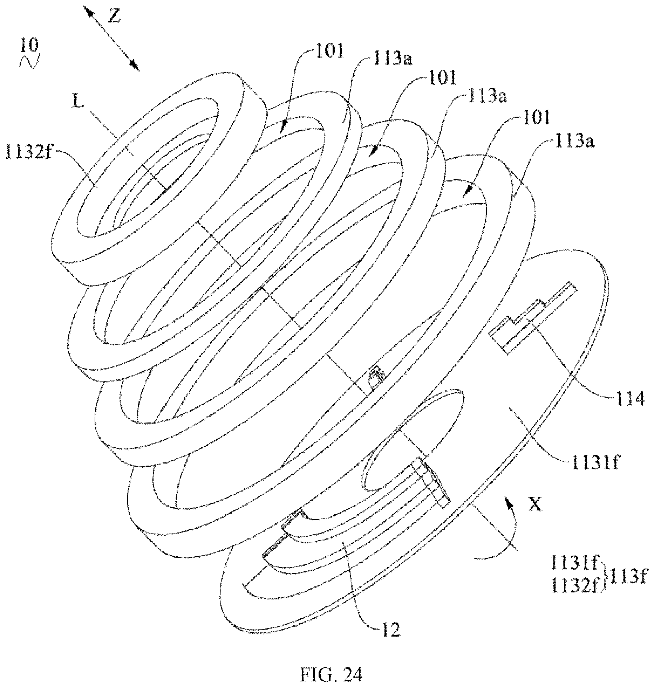

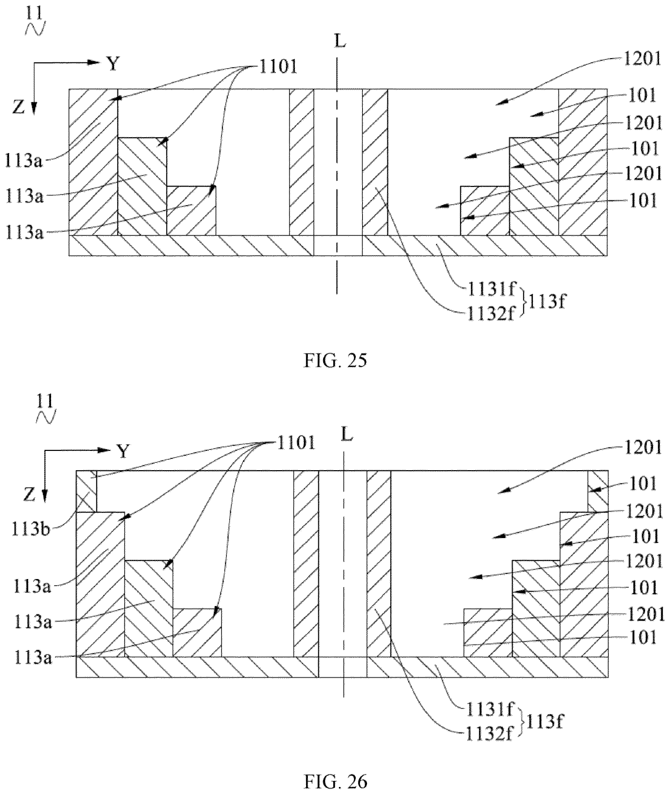

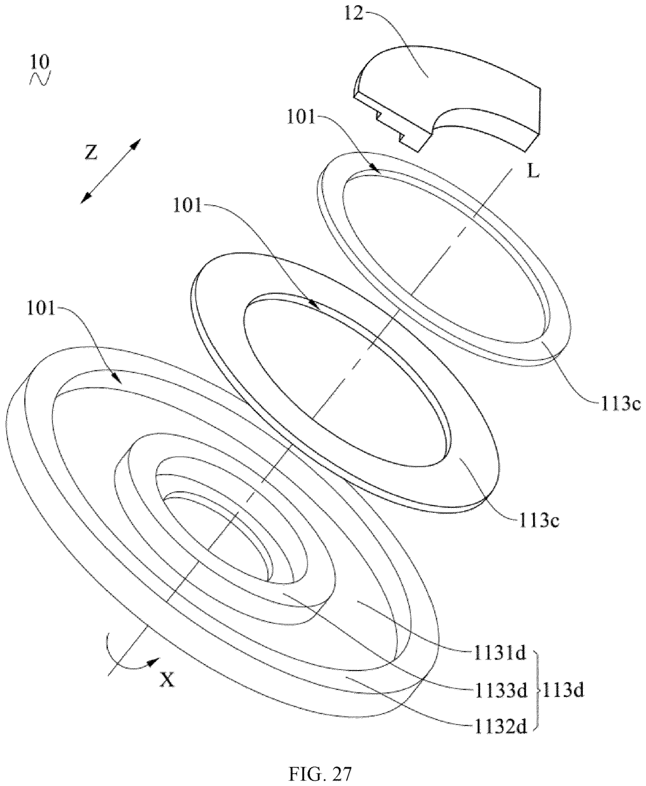

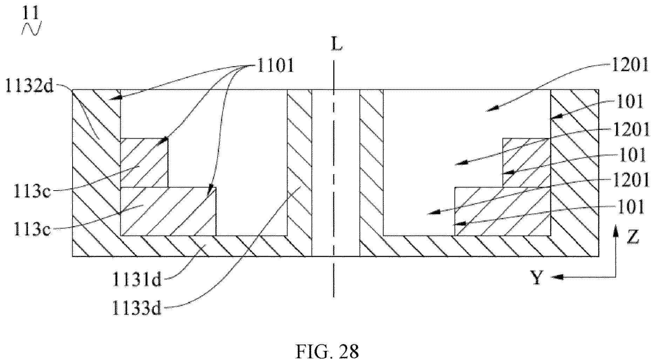

In some embodiments, referring to FIGS. 24-28, FIGS. 24, and 27 show partially exploded views of the motor rotor 10 provided by two embodiments of the present disclosure, respectively, FIG. 25 shows a cross-sectional view of the mounting frame 11 shown in FIG. 24, FIG. 28 shows a cross-sectional view of the mounting frame 11 shown in FIG. 27, and FIG. 26 shows a cross-sectional view of the mounting frame 11 of the motor rotor 10 provided by some embodiments of the present disclosure. The mounting frame 11 is of a split splicing structure. In some embodiments, the mounting frame 11 includes a plurality of frame bodies 113, the plurality of frame bodies being connected in sequence to form the first step structure 1101.

The mounting frame 11 is obtained by splicing a plurality of frame bodies 113 in sequence. The arrangement is such that the first step structure 1101 is formed on the mounting frame 11. In addition, a plurality of frame bodies 113 are spliced in sequence to realize an oil path processing technology of the motor 100, and the degree of freedom of adding the oil path is high.

Here, it should be added that one of the plurality of frame bodies 113 includes the base body 113g. Alternatively, the plurality of frame bodies 113 constitute the base body 113g.

In some embodiments, referring to FIGS. 24 and 25, at least a part of the plurality of frame bodies 113 is a first frame body 113a, a plurality of first frame bodies 113a is provided. The plurality of first frame bodies 113a is annularly arranged in sequence from the inside to the outside in the radial direction Y and has respective thicknesses gradually increased in the axial direction Z, to form a first step structure 1101.

It should be noted that the first frame body 113a is of an annular structure. In addition, each first frame body 113a has the limiting wall 101 on an inner peripheral side thereof.

As shown in FIGS. 24 and 25, a plurality of first frame bodies 113a is arranged in sequence in the radial direction Y. Specifically, the plurality of first frame bodies 113a is annularly arranged in sequence in the radial direction Y, and thicknesses in the axial direction Z of the plurality of first frame bodies 113a are gradually increased outwardly in the radial direction Y. It might be appreciated that, among the plurality of first frame bodies 113a arranged in sequence in the radial direction Y, the first frame body 113a located on the outer side in the radial direction Y is annularly arranged at the outer periphery of the first frame body 113a located on the inner side in the radial direction Y, and the plurality of first frame bodies 113a is provided coaxially, i.e., the central axis L of the plurality of first frame bodies 113a is the central axis L of the mounting frame 11. In addition, the thickness in the axial direction Z of the first frame body 113a located on the outer side in the radial direction Y is greater than the thickness in the axial direction Z of the first frame body 113a located on the inner side in the radial direction Y The arrangement is such that at least a part of the inner peripheral side of each first frame body 113a may be used to resist the centrifugal movement of the magnet steel 12 in the radial direction Y

It should also be noted that the plurality of first frame bodies 113a have a thickness difference in the axial direction Z such that the plurality of first frame bodies 113a form a first step structure 1101. Specifically, at least parts of the plurality of first frame bodies 113a on the inner side in the radial direction Y may be combined to form the first step structure 1101 described above.

It should also be noted that, in the radially outward radial direction Y, the thickness in the axial direction Z of the first frame body 113a located on the outer side in the radial direction Y is greater than the thickness in the axial direction Z of the first frame body 113a located on the inner side in the radial direction Y. Correspondingly, in the axial direction Z towards one side, distances in the radial direction Y of the limiting walls 101 with respect to the central axis L of the mounting frame 11 are gradually increased. Thus, the plurality of first frame bodies 113a of the present embodiment may constitute the mounting frame 11 as shown in FIGS. 17 and 18.

By using a plurality of first frame bodies 113a having different thicknesses in the axial direction Z and having an annular shape, and the plurality of first frame bodies 113a having respective thicknesses gradually increased being annularly arranged in sequence in the radial direction Y, a mounting frame 11 may be obtained. The arrangement is such that it is very simple and easy to implement a forming operation of the mounting frame 11.

In some embodiments, referring to FIG. 26 in conjunction with the other figures, at least a part of the plurality of frame bodies 113 is second frame body 113b, the second frame body 113b and the first frame body 113a are provided in sequence in the axial direction Z to form a first step structure 1101 with the first frame body 113a.

It should be noted that the second frame body 113b has an annular structure, and the inner circumferential side of the second frame body 113b has the limiting wall 101.

In some possible designs, as shown in FIG. 26, the second frame body 113b may be provided on either side of any one of the first frame bodies 113a in the axial direction Z; alternatively, each of two opposite sides of any one of the first frame bodies 113a in the axial direction Z is provided with the second frame body 113b. The inner diameter of the second frame body 113b may be greater than the inner diameter of each of the first frame bodies 113a, may be smaller than the inner diameter of each of the first frame bodies 113a, or may be greater than the inner diameter of a part of the first frame bodies 113a, and may be smaller than the inner diameter of another part of the first frame bodies 113a.

When the inner diameter of the second frame body 113b is greater than the inner diameter of the first frame body 113a, the distance in the radial direction Y of the inner peripheral side of the second frame body 113b with respect to the central axis L is also greater than the distance in the radial direction Y of the inner peripheral side of the first frame body 113a with respect to the central axis L, and other comparisons of the dimensions may be explained by the same reasoning and will not be described in detail herein.

As an example, as shown in FIG. 26, the second frame body 113b are provided on one side in the axial direction Z of the first frame body 113a having the greatest thickness in the axial direction Z, and the inner diameter of the second frame body 113b is greater than the inner diameter of each of the first frame bodies 113a, so that the first frame body 113a and the second frame body 113b may also constitute the mounting frame 11 shown in FIGS. 17 and 8. As an example, when the inner diameter of the second frame body 113b is smaller than the inner diameter of the at least one first frame body 113a, the mounting frame 11 shown in FIG. 19 may be constructed.

By using a plurality of first frame bodies 113a distributed in sequence in the radial direction Y and a second frame body 113b distributed in the axial direction Z with the first frame body 113a, the plurality of frame bodies 113 may be arranged in combination in the axial direction Z and the radial direction Y to form the first step structure 1101, which facilitates acquiring a plurality of different types of the first step structures 1101 with high flexibility.

In some embodiments, referring to FIGS. 27 and 28 in conjunction with the other figures, wherein FIG. 27 shows an exploded view of the mounting frame 11 of the motor rotor 10 provided by some embodiments of the present disclosure, and FIG. 28 shows a cross-sectional view of the mounting frame 11 shown in FIG. 27 after assembly. At least a part of the plurality of frame bodies 113 is third frame body 113c having an annular shape, and a plurality of third frame bodies 113c is provided. The plurality of third frame bodies 113c is provided in sequence in the axial direction Z, and the at least two adjacent third frame bodies 113c have different inner diameters, to form the first step structure 1101.

It should be noted that the limiting wall 101 may be provided on the inner peripheral side of each of the third frame bodies 113c.

It should also be noted that at least two adjacent third frame bodies 113c may have different inner diameters to form the first step structure 1101. Specifically, at least parts of the plurality of third frame bodies 113c on the inner side in the radial direction Y may be combined to form the above-described first step structure 1101.

At least a part of the plurality of third frame bodies 113c have different inner diameters, or all of the plurality of third frame bodies 113c may have different inner diameters. The inner diameters of a part of the plurality of third frame bodies 113c may be different, i.e., there may be at least two third frame bodies 113c having the same inner diameter. When the plurality of third frame bodies 113c having the same inner diameter are not adjacently provided, the plurality of third frame bodies 113c having the same inner diameter may still participate in forming the first step structure 1101 described above.

In some possible designs, as shown in FIGS. 27 and 28, the inner diameters of the plurality of third frame bodies 113c are gradually increased toward one side in the axial direction Z, and correspondingly, distances in the radial direction Y of the plurality of limiting walls 101 with respect to the central axis L of the mounting frame 11 are gradually increased. In some possible designs, among the three adjacent third frame bodies 113c, the inner diameter of the third frame body 113c is smaller than one of the third frame bodies 113c adjacent to each other in the axial direction Z, and smaller than the inner diameter of another one of the third frame bodies 113c adjacent to each other in the axial direction Z, so that the mounting frame 11 shown in FIG. 20 may be constructed.

By using the above-described technical solution, at least a part of the plurality of frame bodies 113 may be arranged in sequence in the axial direction Z to form the first step structure 1101. That is, by using a plurality of third frame bodies 113c having at least partially different inner diameters and arranging the third frame bodies 113c in sequence in the axial direction Z, the mounting frame 11 may be obtained. The arrangement is such that it is very simple and easy to implement a forming operation of the mounting frame 11. In addition, by adjusting the position of the plurality of third frame bodies 113c in the axial direction Z, different types of the first step structures 1101 may be obtained, so that the formation of the mounting frame 11 is very flexible and versatile.

In some embodiments, referring to FIGS. 27 and 28 in conjunction with the other figures, at least a part of the plurality of frame bodies 113 is a fourth frame body 113d including a receiving member 1131d and an annular member 1132d provided on the receiving member 1131d. The third frame body 113c and the receiving member 1131d are distributed in sequence in the axial direction Z, and the annular member 1132d is annularly arranged on the outer sides of the plurality of third frame bodies 113c in the radial direction Y

It might be appreciated that the receiving member 1131d is provided on one side in the axial direction Z of the entirety of the plurality of third frame bodies 113c, so that the receiving member 1131d and the plurality of third frame bodies 113c are arranged in sequence in the axial direction Z. In addition, the annular member 1132d is provided on one side of the receiving member 1131d having the third frame bodies 113c, and the annular member 1132d is annularly arranged on the outer periphery of the plurality of third frame bodies 113c, and each third frame body 113c and the annular member 1132d are arranged in sequence in the radial direction Y

By using the above-mentioned technical solution, the third frame body 113c is provided on one side of the receiving member 1131d in the axial direction Z, and the annular member 1132d is annularly arranged on the outer periphery of the plurality of third frame bodies 113c. As such, the plurality of third frame bodies 113c may be limited in the axial direction Z under the action of the receiving member 1131d, and may also be limited in the axial direction Y under the action of the annular member 1132d, so that the overall stability of the mounting frame 11 may be improved, and the mounting reliability of the mounting frame 11 and the magnet steel 12 may be improved.

It should be added that when the dimension in the axial direction Z of the annular member 1132d is greater than the sum of the dimensions in the axial direction Z of the plurality of third frame bodies 113c, the annular member 1132d may also cooperate to form the first step structure 1101, as shown in FIGS. 27 and 28, and in particular to obtain the mounting frame 11 shown in FIGS. 17 and 18.

In some embodiments, as shown in FIGS. 27 and 28 in conjunction with the other figures, the fourth frame body 113d may further include a first intermediate member 1133d, and a plurality of third frame bodies 113c is annularly arranged on the outer periphery of the first intermediate member 1133d and provided coaxially with the first intermediate member 1133d. The arrangement is such that a position in the radial direction Y between the third frame body 113c and the first intermediate member 1133d may also constitute a magnet steel groove 1021.

In some embodiments, as shown in FIGS. 24 and 25, at least a part of the plurality of frame bodies 113 may be sixth frame body 113f. The sixth frame body 113f may include a bottom plate 1131f and a second intermediate member 1132f provided on the bottom plate 1131f. A plurality of first frame bodies 113a is annularly arranged on the outer periphery of the second intermediate member 1132f and provided coaxially with the second intermediate member 1132f. In addition, the plurality of first frame bodies 113a is provided on the bottom plate 1131f. As such, the first frame body 113a and the second intermediate member 1132f constitute the magnet steel groove 1021.

The receiving member 1131d may be the above-mentioned base body 113g, and the bottom plate 1131f may also be the above-mentioned base body 113g.

In some embodiments, the plurality of frame bodies 113 is of an integral structure or a split connection structure.

It might be appreciated that the first frame body 113a, the second frame body 113b, the third frame body 113c, the fourth frame body 113d, and the sixth frame body 113f may be a single integral structure, or may be a split connection structure.

As an example, when the fourth frame body 113d is of an integral structure, the annular member 1132d, the receiving member 1131d and the first intermediate member 1133d of the fourth frame body 113d constitute an integral connection structure. When the fourth frame body 113d is of a split connection structure, at least two of the annular member 1132d, the receiving member 1131d and the first intermediate member 1133d are in split connection.

By providing the plurality of frame bodies 113 of an integral structure, the mounting frame 11 may be constituted by a plurality of integrally provided frame bodies 113. By providing the plurality of frame bodies 113 as a split connection structure, the frame bodies 113 may be formed by splicing a plurality of parts, and then the plurality of frame bodies 113 are spliced to form the mounting frame 11, to improve the splicing flexibility of the mounting frame 11 and facilitate the construction of a plurality of different types of the first step structures 1101. When the plurality of frame bodies 113 is of a split connection structure, the plurality of the frame bodies 113 may be spliced in at least one of a radial direction Y, an axial direction Z, a circumferential direction X and the like to form the frame body 113.

In some embodiments, the plurality of frame bodies 113 may be spliced in at least one of the axial direction Z, the radial direction Y, the circumferential direction X, and the like to be freely and flexibly spliced to form the mounting frame 11. In addition, an oil path processing technology of the motor 100 is achieved, and the degree of freedom of adding the oil path is high.

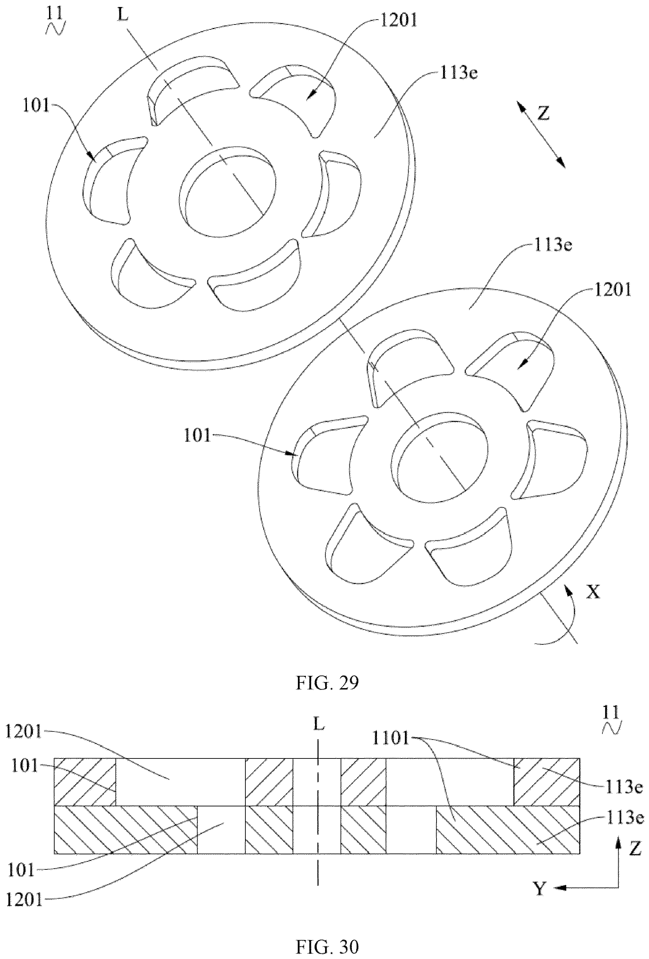

In some embodiments, referring to FIGS. 29 and 30 in conjunction with the other figures, wherein FIG. 29 shows an exploded view of the mounting frame 11 of the motor rotor 10 provided by some embodiments of the present disclosure, and FIG. 30 shows a cross-sectional view of the mounting frame 11 shown in FIG. 29 after assembly. The mounting frame 11 includes a plurality of fifth frame bodies 113e distributed in sequence in the axial direction Z. Each of the plurality of fifth frame bodies 113e has the magnet steel groove 1021, the limiting walls 101 of the magnet steel grooves 1021 of at least some adjacent ones of the plurality of fifth frame bodies 113e are staggered in the radial direction Y

In some possible designs, among the plurality of fifth frame bodies 113e, the limiting walls 101 of the magnet steel grooves 1021 of two adjacent fifth frame bodies 113e are staggered in the radial direction Y, and the limiting walls 101 of the magnet steel grooves 1021 of another adjacent fifth frame bodies 113e are located at the same position in the radial direction Y. In some possible designs, the limiting walls 101 of the magnet steel grooves 1021 of any two adjacent ones of the plurality of fifth frame bodies 113e are staggered in the radial direction Y.

It might be appreciated that the groove wall the magnet steel groove 1021 facing towards the central axis L of the mounting frame 11 is the limiting wall 101. The limiting walls 101 of the magnet steel grooves 1021 of the adjacent two fifth frame bodies 113e are staggered in the radial direction Y such that the limiting walls 101 of the magnet steel grooves 1021 of the adjacent two fifth frame bodies 113e are arranged at intervals in the radial direction Y

In some possible designs, the magnet steel grooves 1021 of the two adjacent fifth frame bodies 113e may be aligned and in communication with each other in the axial direction Z, or may not be in communication with each other in the axial direction Z.

The arrangement is such that the mounting frame 11 may be formed with a plurality of limiting walls 101 distributed at intervals in the radial direction Y to distribute the stress of the mounting frame 11 in the radial direction Y, thereby improving the affordability of the mounting frame 11 to the centrifugal movement of the magnet steel 12 in the radial direction Y. In addition, by opening a magnet steel groove 1021 on each fifth mounting frame 11, and then splicing a plurality of fifth mounting frames 11 in the axial direction Z, a mounting frame 11 capable of distributing stress in the radial direction Y may be obtained, which is very convenient and easy to implement.

In some embodiments, referring to FIGS. 10-13 in conjunction with the other figures, the dimension in the circumferential direction X of each magnet steel groove 1021 is gradually increased outwardly in the radial direction Y.

It might be appreciated that the dimension in the circumferential direction X of the outer side of each magnet steel groove 1021 in the radial direction Y is greater than the dimension in the circumferential direction X of the inner side of the magnet steel groove 1021 in the radial direction Y.

The arrangement is such that each magnet steel groove 1021 may be substantially in the shape of a sector, a trapezoid, or the like, from a perspective of view in the axial direction Z, which facilitates laying of the magnet steel grooves 1021 on the mounting frame 11 as much as possible, which helps to increase the area occupied by the magnet steel 12 on a side of the mounting frame 11 in the axial direction Z. That is, a large area of the surface of the magnet steel 12 in the axial direction Z may be retained, so that the magnet steel 12 may rotate the mounting frame 11 together under the action of the stator 20, to improve the output efficiency of outputting power through the rotation shaft 30.

In some embodiments, magnet steel 12 is of a split connection structure. Referring to FIGS. 6-9, 16, 22, and 23 in conjunction with the other figures, the magnet steel 12 includes a plurality of blocks 121, it might be appreciated that the magnet steel 12 may be divided into a plurality of parts.

In some embodiments, as shown in FIGS. 6-9, 16, and 22 in conjunction with the other figures, the plurality of blocks 121 are distributed in sequence in the radial direction Y

In some embodiments, as shown in FIG. 23, the plurality of blocks 121 are distributed in sequence in the axial direction Z.

In some embodiments, the plurality of blocks 121 are distributed in sequence in the circumferential direction X.

The arrangement is such that the plurality of blocks 121 of the magnet steel 12 may be distributed in sequence in the axial direction Z, may be distributed in sequence in the circumferential direction X, may be distributed in sequence in the radial direction Y, and may even be combined and spliced along at least two of the axial direction Z, the circumferential direction X, and the radial direction Y As such, there are many ways to combine magnetic steel 12 freely and flexibly, facilitating the magnet steel 12 to be matched with a plurality of mounting regions 102 of the mounting frame 11, thereby facilitating the resistance of the limiting walls 101 of the mounting frame 11 to the centrifugal movement in the radial direction Y of the mounting regions 102.

There may be one block 121 or a plurality of blocks 121 for a mounting region 102, and the plurality of blocks 121 may be spliced in at least one of the circumferential direction X, the axial direction Z, and the radial direction Y. Of course, one block 121 may be provided in a plurality of mounting regions 102 at the same time, which may be provided according to actual usage.

In some embodiments, blocks 121 of the plurality of blocks 121 that are adjacent to each other in the radial direction Y are arranged or bonded at intervals.

In some embodiments, blocks 121 of the plurality of blocks 121 that are adjacent to each other in the circumferential direction X are arranged or bonded at intervals.

It should be noted that the magnet steel 12 is fixed by adhesion, and the adhesion may be achieved by means of adhesive tape, glue coating and film coating. The glue in the glue coating may be a solid glue, a liquid glue, and the like.

By using the above-mentioned technical solution, it is difficult for the magnetic field lines to pass through two adjacent blocks 121 arranged or bonded at intervals, and the adjacent blocks 121 in the radial direction Y may form eddy currents alone, and the adjacent blocks 121 in the circumferential direction X may also form eddy currents alone. That is, the eddy currents formed during operation of the motor 100 may be reduced, helping to reduce eddy current losses.

In some embodiments, the mounting frame 11 is a permeability magnetic material member.

It might be appreciated that the mounting frame 11 has a permeability magnetic function.

Specifically, the mounting frame 11 is made of a permeability magnetic material. The permeability magnetic material may include a silicon steel sheet, a manganese zinc ferrite, a nickel zinc ferrite, an iron-cobalt series alloy, a soft magnetic ferrite, an amorphous soft magnetic alloy, an ultra-microcrystalline soft magnetic alloy, and the like. The mounting frame 11 may also be made of a soft magnetic material, such as wound iron core or powder metallurgy. For example, the wound iron core may be formed by winding a silicon steel sheet, which is convenient to manufacture and may also better reduce eddy current loss. The soft magnetic material refers to a material which is easy to be magnetized and also easy to be demagnetized. For example, pure iron, low carbon steel, iron-silicon alloy, iron-aluminum alloy, iron-silicon-aluminum alloy, nickel-iron alloy, iron-cobalt alloy, soft magnetic ferrite, amorphous soft magnetic alloy, ultra-microcrystalline soft magnetic alloy, and the like, may be used as the soft magnetic material.

By using the above-mentioned technical solution, the mounting frame 11 may form a permeability magnetic plate. The arrangement is such that the magnetic field lines may pass through the entirety formed by the magnet steel 12 and the mounting frame 11 in the axial direction Z, and the range of the magnetic field lines may be expanded to help improve the structural stability of the motor rotor 10 and meet a use requirement of high rotation speed.

In some embodiments, the mounting frame 11 is a non-permeability magnetic material member.

The arrangement is such that the mounting frame 11 is prevented from being permeability magnetic, i.e., a holder.

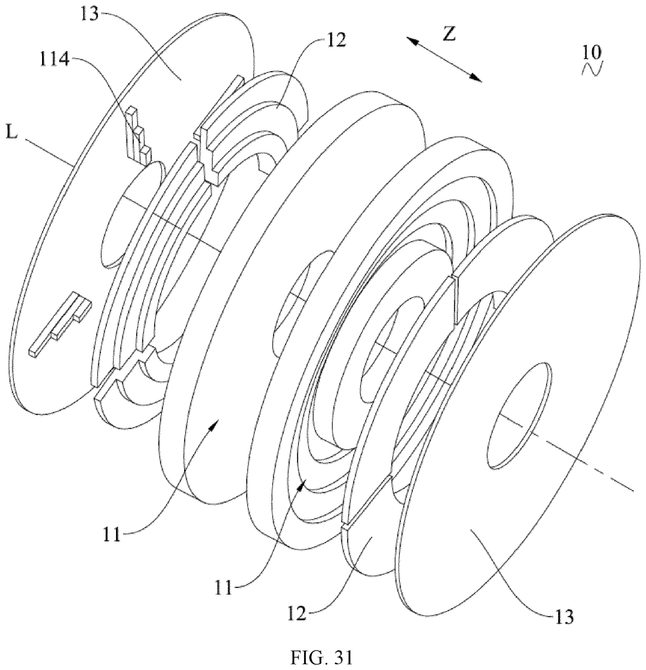

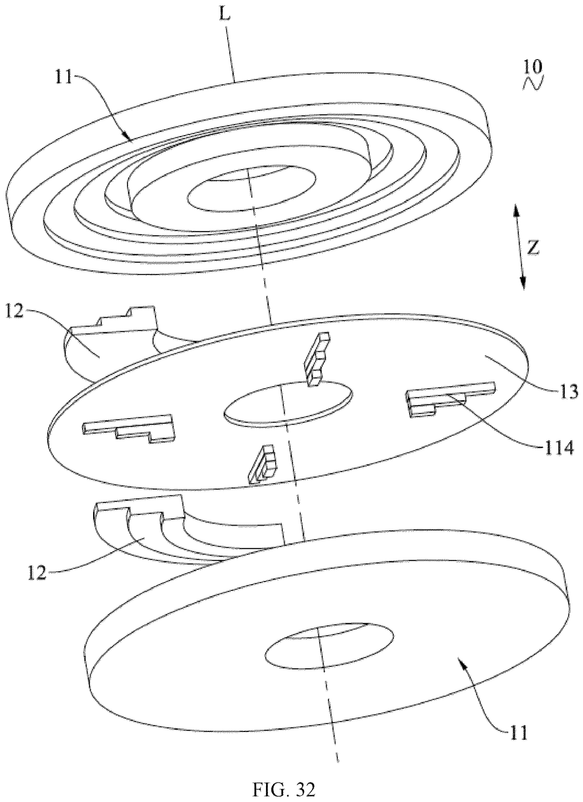

In some embodiments, referring to FIGS. 10, 11, 24, 31, and 32 in conjunction with the other figures, FIGS. 31 and 32 show exploded views of the motor rotor 10 provided by two embodiments of the present disclosure, respectively. A plurality of magnet steels 12 is provided, and the plurality of magnet steels 12 is distributed in sequence on the mounting frame 11 in the circumferential direction X. The mounting frame 11 further includes a plurality of limiting structures 114, wherein the plurality of limiting structures 114 are distributed in sequence in the circumferential direction X, and each of the plurality of magnet steels 12 is located between two limiting structures of the plurality of limiting structures 114 that are adjacent to each other in the circumferential direction X.

It might be appreciated that the limiting structures 114 and the magnet steels 12 are alternately distributed in the circumferential direction X. That is, the distribution directions of the plurality of limiting structures 114 and the plurality of magnet steels 12 are: the limiting structure 114, the magnet steel 12, the limiting structure 114, the magnet steel 12, ..., and so on.

Here, it should be noted that the plurality of limiting structures 114 adjacent to each other in the circumferential direction X divides the mounting frame 11 into a plurality of regions distributed in sequence in the circumferential direction X, and each of the plurality of regions is provided with a plurality of mounting regions 102 distributed in sequence in the radial direction Y

When the mounting region 102 is provided with the magnet steel groove 1021, the two opposite sides of the two limiting structures 114 adjacent to each other in the circumferential direction X respectively correspond to the two opposite side walls of the magnet steel groove 1021 in the circumferential direction X. On this basis, when a first boss 112 is provided on the side wall in the circumferential direction X of the part connecting the adjacent two magnet steel grooves 1021, the first boss 112 is provided on the limiting structure 114.

Here, it should be noted that as shown in FIGS. 17, 24, 31, and 32 in conjunction with the other figures, when a plurality of magnet steel grooves 1021 arranged in the radial direction Y form a first step structure 1101 in the axial direction Z, and each step of the first step structure 1101 is annular, the limiting structure 114 also needs to be provided with a corresponding step structure, so that the limiting structure 114 is matched with the step structure, facilitating the limiting structure 114 to be mounted on the first step structure 1101.

In the step structure constituted by the limiting structure 114, a wall surface of the step structure facing towards the limiting wall 101 of the first step structure 1101 is parallel to the limiting wall 101, and a wall surface of the step structure facing towards a step surface of the first step structure 1101 which is not the limiting wall 101 in the axial direction Z may be parallel to a corresponding step surface of the first step structure 1101 which is not the limiting wall 101. As such, the limiting structure 114 is matched with the first step structure 1101 to facilitate stable assembly of the limiting structure 114.

The arrangement is such that two adjacent magnet steels 12 are separated by the limiting structure 114, so that the limiting structure 114 separates magnet steels 12 of different magnetic poles to facilitate the magnet steels 12 to drive the motor rotor 10 to rotate as a whole under the action of the stator 20 to output power through the rotation shaft 30.

In some embodiments, the magnet steel 12 is fixedly connected to the mounting frame 11.

The arrangement is such that the relative position of the magnet steel 12 and the mounting frame 11 is fixed, so that the centrifugal movement of the magnet steel 12 in the radial direction Y is resisted by the limiting wall 101, and the fixed connection relationship between the magnet steel 12 and the mounting frame 11 may also enable the mounting frame 11 to resist the centrifugal movement of the magnet steel 12 in the radial direction Y, which helps to improve the mounting reliability of the mounting frame 11 and the magnet steel 12, and helps to realize the effect of high rotation speed.

In some embodiments, the magnet steel 12 may be in an interference fit with the mounting frame 11.

It might be appreciated that when a mounting region 102 is provided with a magnet steel groove 1021, at least a part of the magnet steel 12 is in an interference fit with the magnet steel groove 1021.

In some embodiments, the magnet steel 12 may be in an injection-molded connection with the mounting frame 11.

In some embodiments, the magnet steel 12 may be adhesively fixed to mounting frame 11.

The magnet steel 12 is fixed by adhesion to the mounting frame 11, and the adhesion may be achieved by means of adhesive tape, glue coating and film coating. The glue in the glue coating may be a solid glue, a liquid glue, and the like.

By using the above-mentioned technical solution, the magnet steel 12 may be fixed with the mounting frame 11 by at least one of interference fit, injection-molded connection and fixation by adhesion, which may all enable a high mounting reliability between the mounting frame 11 and the magnet steel 12.

It should be added that, when at least a part of the magnet steel 12 is provided on the surface of the mounting frame 11 in the axial direction Z, the fixation between the magnet steel 12 and the mounting frame 11 may be achieved by at least one of injection-molded connection and fixation by adhesion. When at least a part of the magnet steel 12 is provided within the magnet steel groove 1021, the part of the magnetic steel 12 embedded within the magnet steel groove 1021 may be fixed to the magnet steel groove 1021 by at least one of the interference fit, the injection-molded connection, and the fixation by adhesion.

It should be further added that when at least a part of the magnet steel 12 is provided on the surface of the mounting frame 11 in the axial direction Z, and another part of the magnet steel 12 is provided in the magnet steel groove 1021, the at least a part of the magnet steel 12 may be fixed to the surface of the mounting frame 11 by at least one of injection-molded connection and fixation by adhesion, and the another part of the magnet steel 12 provided in the magnet steel groove 1021 may be fixed by at least one of interference fit, injection-molded connection, and fixation by adhesion.

In some embodiments, referring also to FIGS. 31 and 32 in conjunction with the other figures, the motor rotor 10 further includes a protective component 13, the magnet steel 12 is exposed to one side or two opposite sides of the mounting frame 11 in the axial direction Z, and the protective component 13 is arranged on a side of the mounting frame 11 to which the magnet steel 12 is exposed.

In some possible designs, the magnet steel 12 is arranged on one of the side surfaces of the mounting frame 11 in the axial direction Z; alternatively, the mounting frame 11 has a magnet steel groove 1021 provided on one side of the mounting frame 11 in the axial direction Z, and the magnet steel groove 1021 is a groove. On this basis, the magnet steel 12 is exposed to one side of the mounting frame 11 in the axial direction Z, and the protective component 13 is provided on one side of the mounting frame 11 in the axial direction Z and covers the magnet steel 12 exposed in the axial direction Z.

In some possible designs, the magnet steel 12 is arranged on each of two opposite side surfaces of the mounting in the axial direction Z; or the magnet steel groove 1021 is provided as a through groove penetrating the mounting frame 11 in the axial direction Z; or the magnet steel groove 1021 is a groove, and each of two opposite sides of the mounting frame 11 in the axial direction Z has the magnet steel groove 1021. On this basis, the magnet steel 12 is exposed to the two opposite sides of the mounting frame 11 in the axial direction Z, and each of the two opposite sides of the mounting frame 11 in the axial direction Z is provided with the protective component 13.

The protective component 13 is arranged on a side in the axial direction Z of the mounting frame 11 to which the magnet steel 12 is exposed, so that the protective component 13 may seal the magnet steel 12 together with the mounting frame 11 to realize the protection of the magnet steel 12.

In some embodiments, the protective component 13 is a permeability magnetic material component.

It might be appreciated that the protective component 13 has a permeability magnetic function.

Specifically, the protective component 13 is made of a permeability magnetic material. The permeability magnetic material may include a silicon steel sheet, a manganese zinc ferrite, a nickel zinc ferrite, an iron-cobalt series alloy, a soft magnetic ferrite, an amorphous soft magnetic alloy, an ultra-microcrystalline soft magnetic alloy, and the like. The protective component 13 may also be made of soft magnetic material, such as wound iron core or powder metallurgy. For example, the wound iron core may be formed by winding a silicon steel sheet, which is convenient to manufacture and may also better reduce eddy current loss. The soft magnetic material refers to a material which is easy to be magnetized and is also easy to be demagnetized. For example, pure iron, low carbon steel, iron-silicon alloy, iron-aluminum alloy, iron-silicon-aluminum alloy, nickel-iron alloy, iron-cobalt alloy, soft magnetic ferrite, amorphous soft magnetic alloy, ultra-microcrystalline soft magnetic alloy, and the like may be used as the soft magnetic material.

By using the solution described above, the protective component 13 may form a permeability magnetic plate. The arrangement is such that in one aspect, it is not only possible for the main magnetic field synchronized with the motor rotor 10 to pass through, to achieve torque output. Alternatively, a harmonic magnetic field of the stator 20 may be shielded by magnetic permeability of the protective component 13 to reduce eddy current loss, thereby reducing eddy current loss of the motor 100 using the motor rotor 10 and improving the output efficiency of the motor 100.

In some embodiments, the protective component 13 is provided with a positioning groove (not shown) in which at least a part of the magnet steel 12 is provided.

It might be appreciated that the magnet steel 12 is provided on the surface of the mounting frame 11 in the axial direction Z and that at least a part of the magnet steel 12 in the axial direction Z is embedded in a positioning groove of the protective component 13. Alternatively, a part of the magnet steel 12 in the axial direction Z is embedded in the magnet steel groove 1021 and another part of magnet steel 12 is embedded in the positioning groove.

The arrangement is such that a groove wall of the positioning groove facing towards the central axis L of the mounting frame 11 in the radial direction Y may also resist the centrifugal movement of the magnet steel 12 in the radial direction Y, which may improve the resistance of the motor rotor 10 to the centrifugal movement of the magnet steel 12 in the radial direction Y to improve the structural stability and reliability of the motor rotor 10 and facilitate the effect of using the motor rotor 10 at a high rotation speed.

In some embodiments, referring to FIG. 31 in conjunction with the other figures, a plurality of mounting frames 11 is provided, and the plurality of mounting frames 11 is distributed in sequence in the axial direction Z, and the protective component 13 is provided between the two adjacent mounting frames 11.

It might be appreciated that among the two mounting frames 11 adjacent to each other in the axial direction Z, the magnet steel 12 on either mounting frame 11 is at least exposed to one side facing towards the other mounting frame 11, i.e., the magnet steels 12 of both mounting frames 11 are at least exposed to the two opposite sides of the mounting frame 11.

The arrangement is such that by arranging a protective component 13 between two adjacent mounting frames 11, one protective component 13 may achieve a protective effect against the magnet steels 12 on the two mounting frames 11, which reduces the use of the protective component 13 and facilitates a miniaturized design of the motor rotor 10.

In some embodiments, referring to FIG. 32 in conjunction with the other figures, a plurality of protective components 13 is provided, and the plurality of protective components 13 is distributed in sequence in the axial direction Z.

In some embodiments, referring to FIG. 32 in conjunction with the other figures, a plurality of mounting frames 11 is provided between two adjacent protective components 13, and the plurality of mounting frames 11 located between the two protective components 13 is distributed in sequence in the axial direction Z.

The arrangement is such that the magnet steels 12 on the two mounting frames 11 may interact with the stators 20 on the two opposite sides, respectively, facilitating the rotation of one motor rotor 10 by the two stators 20 to improve the output efficiency.

In some embodiments, one mounting frame 11 is provided between two adjacent protective components 13, and the magnet steels 12 are exposed on both sides of the mounting frame 11 in the axial direction Z.

The arrangement is such that the magnet steel 12 on the mounting frame 11 may interact with the stators 20 on two opposite sides, respectively, to facilitate the rotation of one motor rotor 10 by the two stators 20 to improve the output efficiency.

In some embodiments, when a plurality of protective plates and a plurality of mounting frames 11 are provided, the above two solutions may be provided at the same time, i.e., a part of the protective plates and the mounting frames 11 satisfy the form shown in FIG. 32, the other part of the protective plates and the mounting frames 11 satisfy the form that one mounting frame 11 is provided between two adjacent protective components 13 and the magnet steel 12 is exposed to both sides of the mounting frame 11 in the axial direction Z.

Based on the above concept, referring to FIGS. 2 to 5 in conjunction with the other figures, the embodiment of the present disclosure further provides a motor 100 including a motor rotor 10. Here, the motor rotor 10 in this embodiment is the same as the motor rotor 10 in the previous embodiment, and referring to the description of the motor rotor 10 in the previous embodiment, which will not be repeated here. For other components of the motor 100, such as the stator 20 and the rotation shaft 30, reference is also made to the relevant parts described above, which will not be repeated here.

The motor 100 may be an axial motor. While the motor rotor 10 referred to in the above embodiments may be applied to a radial motor, the motor 100 may also be a radial motor. For example, when each mounting region 102 of the mounting frame 11 has a magnet steel groove 1021, the outermost magnet steel groove 1021 in the radial direction Y may penetrate the outer edge of the mounting frame 11 in the radial direction Y, so that the motor rotor 10 may be applied to a radial motor, i.e., the motor 100 may be a radial motor.

Embodiments of the present disclosure provide a motor 100 that allows the mounting frame 11 to tolerate significant stress using the motor rotor 10 according to the embodiments described above. As such, the mounting frame 11 and the magnet steel 12 have a high combination reliability, i.e., the motor rotor 10 has a high structural reliability, and it is possible to alleviate the problem that the magnet steel 12 is thrown out when the motor rotor 10 rotates. Therefore, the motor 100 may meet a requirement of using the motor rotor at a high rotation speed and has high output efficiency.

Based on the above concepts, referring to FIG. 1 in conjunction with the other figures. Embodiments of the present disclosure also provide a power assembly 1000 including the motor 100. The motor 100 in this embodiment is the same as the motor 100 in the previous embodiment, and referring to the description of the motor 100 of the previous embodiment, which will not be repeated here. Other components of the power assembly 1000, such as the transmission, the controller 400, the battery 300 and the like which may also be present, may also be referred to in connection with the description above and will not be repeated here.

Embodiments of the present disclosure provide a power assembly 1000, and by using the motor 100 according to the above-mentioned embodiments, a requirement of using the motor 100 at a high rotation speed can be met, and the output efficiency is high, thereby enabling the power output efficiency of the power assembly 1000 to be high.

Based on the above concepts, referring to FIG. 1 in conjunction with the other figures. Embodiments of the present disclosure also provide an electric apparatus that includes a motor 100 or a power assembly 1000. The motor 100 and the power assembly 1000 in this embodiment are the same as those in the motor 100 and the power assembly 1000 in the previous embodiment, reference will be made to the relevant description of the motor 100 and the power assembly 1000 in the previous embodiment, which will not be repeated here. For the specific solution of the power device, reference may also be made to the relevant parts mentioned above, which will not be repeated here.

Embodiments of the present disclosure provide an electric apparatus that may deliver more efficient power to better meet operational requirements by using a motor 100 or power assembly 1000 according to the embodiments described above.

As one of the embodiments of the present disclosure, as shown in FIGS. 6 and 7, the motor rotor 10 includes a mounting frame 11 and a magnet steel 12, wherein a magnet steel 12 is provided on the surface of one side or each of two opposite sides of the mounting frame 11 in the axial direction Z. On the surface of one side of the mounting frame 11 in the axial direction Z, the mounting frame 11 has a plurality of mounting regions 102 distributed in sequence in the radial direction Y, a separator 111 is provided between two adjacent mounting regions 102, and the outermost mounting region 102 in the radial direction Y has a retainer 115. The magnet steel 12 includes a plurality of blocks 121 distributed in sequence in the radial direction Y, the plurality of blocks 121 are respectively provided on the mounting regions 102 distributed in sequence in the radial direction Y, and the plurality of blocks 121 are all provided on the surface of the mounting frame 11 in the axial direction Z. In addition, the separator 111 is intended to resist a centrifugal movement in the radial direction Y of the block 121 on the mounting region 102 located on the inner side in the radial direction Y of the separator, and the retainer 115 is intended to resist the block 121 of the outermost mounting region 102 in the radial direction Y. Both a wall surface of the separator 111 facing towards the central axis L of the mounting frame 11 in the radial direction Y and a wall surface of the retainer 115 facing towards the central axis L of the mounting frame 11 in the radial direction Y are the limiting walls 101.

As one of the embodiments of the present disclosure, as shown in FIG. 10, the motor rotor 10 includes a mounting frame 11 and a magnet steel 12. The mounting frame 11 is provided with a plurality of mounting regions 102 distributed in sequence in the radial direction Y Each mounting region 102 has a magnet steel groove 1021, and the groove wall of each magnet steel groove 1021 facing towards the central axis L of the mounting frame 11 in the radial direction Y is a limiting wall 101. Two adjacent magnet steel grooves 1021 are spaced apart by a separator 111 to be distributed at intervals. The wall surface of the separator 111 facing towards the central axis L of the mounting frame 11 in the radial direction Y is the limiting wall 101 of the magnet steel groove 1021 on the inner side in the radial direction Y thereof.

As one of the embodiments of the present disclosure, as shown in FIGS. 11 to 14, the motor rotor 10 includes a mounting frame 11 and a magnet steel 12. The mounting frame 11 is provided with a plurality of mounting regions 102 distributed in sequence in the radial direction Y Each mounting region 102 has a magnet steel groove 1021, and the groove wall of each magnet steel groove 1021 facing towards the central axis L of the mounting frame 11 in the axial direction Z is a limiting wall 101. The two adjacent magnet steel grooves 1021 are in communication with each other in the radial direction Y, and the first boss 112 is provided on each of the two opposite side walls in the circumferential direction X of the part connecting the two adjacent magnet steel grooves, and the wall surface of the first boss 112 facing towards the central axis L of the mounting frame 11 in the radial direction Y is the limiting wall 101 of the magnet steel groove 1021 on the inner side in the radial direction Y thereof.

As one of the embodiments of the present disclosure, as shown in FIGS. 17 and 18, the motor rotor 10 includes a mounting frame 11 and a magnet steel 12. The mounting frame 11 is provided with a plurality of mounting regions 102 distributed in sequence in the radial direction Y. Each mounting region 102 has a magnet steel groove 1021, and the groove wall of each magnet steel groove 1021 facing towards the central axis L of the mounting frame 11 in the radial direction Y is a limiting wall 101. The plurality of magnet steel grooves 1021 arranged in the radial direction Y form a first step structure 1101 in the axial direction Z, the wall surface of the first step structure 1101 facing towards the central axis L of the mounting frame 11 in the radial direction Y is a limiting wall 101, and the plurality of limiting walls 101 on the first step structure 1101 are distributed in sequence in the axial direction Z. In the axial direction Z towards one side, distances in the radial direction Y of the plurality of limiting walls 101 with respect to the central axis L of the mounting frame 11 are gradually increased. The first step structure 1101 is in the shape of an annular step.

While the present disclosure has been described referring to the preferred embodiments, it is to be understood that the present disclosure is not limited to the disclosed embodiments, but it is intended to cover various modifications, equivalents, and alternatives falling within the spirit and scope of the present disclosure.

The specification of the present application is supplemented by the following numbered clauses, which should not be taken to be claims.
Clause 1. A motor rotor, comprising:
   a mounting frame; and
   a magnet steel mounted to the mounting frame,
   wherein the mounting frame is provided with a limiting wall for resisting a centrifugal movement of the magnet steel in a radial direction.
Clause 2. The motor rotor according to clause 1, wherein the mounting frame is provided with a plurality of mounting regions distributed in the radial direction, the magnet steel being mounted in the plurality of mounting regions, at least one of the plurality of mounting regions being provided with the limiting wall.
Clause 3. The motor rotor according to clause 2, wherein a separator is provided between two mounting regions adjacent to each other in the radial direction, a wall surface of the separator facing towards a central axis of the mounting frame being the limiting wall.
Clause 4. The motor rotor according to clause 3, wherein each of the plurality of mounting regions adjacent to each other in the radial direction is provided with a magnet steel groove, the magnet steel groove having the limiting wall; wherein the separator is provided between two adjacent magnet steel grooves, the wall surface of the separator facing towards the central axis of the mounting frame being the limiting wall of the magnet steel groove located at an inner side of the separator in the radial direction.
Clause 5. The motor rotor according to any one of clauses 2 to 4, wherein each of the plurality of mounting regions is provided with the limiting wall, the limiting walls of the plurality of mounting regions being distributed at intervals in the radial direction.
Clause 6. The motor rotor according to any one of clauses 2-5, wherein at least one of the plurality of mounting regions is provided with a magnet steel groove, the magnet steel groove having the limiting wall.
Clause 7. The motor rotor according to clause 6, wherein the magnet steel has a profile matched with the limiting wall of the magnet steel groove.
Clause 8. The motor rotor according to clause 6 or 7, wherein each of the plurality of mounting regions adjacent to each other in the radial direction is provided with the magnet steel groove, the two adjacent magnet steel grooves being in communication with each other in the radial direction, the limiting wall being provided at a position where the two adjacent magnet steel grooves are in communication with each other.
Clause 9. The motor rotor according to clause 8, wherein a first boss is provided on a side wall in a circumferential direction of a part connecting the two adjacent magnet steel grooves, a wall surface of the first boss facing towards the central axis of the mounting frame being the limiting wall.
Clause 10. The motor rotor according to clause 9, wherein:
   the magnet steel is of an integral structure and has a second boss matched with the limiting wall; or
   the magnet steel comprises a plurality of blocks, at least a part of the plurality of blocks being arranged along the radial direction, wherein among two blocks of the plurality of blocks that are adjacent to each other in the radial direction, at least one side in the circumferential direction of one block located on an inner side in the radial direction extends in the circumferential direction out of one block located on an outer side in the radial direction, to form a third boss matched with the limiting wall.
Clause 11. The motor rotor according to clause 9 or 10, wherein the two adjacent magnet steel grooves are a first magnet steel groove and a second magnet steel groove located on an outer side of the first magnet steel groove in the radial direction; wherein a circumferential dimension of an outer side of the second magnet steel groove in the radial direction is greater than a circumferential dimension of an inner side of the second magnet steel groove in the radial direction, and wherein two opposite sides of the outer side in the radial direction of the first magnet steel groove in the circumferential direction extend in the circumferential direction out of the inner side of the second magnet steel groove in the radial direction, to form the first boss.
Clause 12. The motor rotor according to any one of clauses 8 to 11, wherein the plurality of magnet steel grooves arranged in the radial direction forms a first step structure in an axial direction, a wall surface of the first step structure facing towards a central axis of the mounting frame being the limiting wall.
Clause 13. The motor rotor according to clause 12, wherein in the axial direction, radial distances of at least a part of the limiting walls with respect to the central axis of the mounting frame are gradually increased.
Clause 14. The motor rotor according to clause 12 or 13, wherein a radial distance of at least one of the limiting walls with respect to the central axis of the mounting frame is greater than or smaller than radial distances of two limiting walls, which are adjacent to each other in the axial direction, with respect to the central axis of the mounting frame.
Clause 15. The motor rotor according to any one of clauses 12 to 14, wherein the mounting frame further comprises a base body, the first step structure being provided on the base body; wherein the radial distance of at least one of the limiting walls with respect to the central axis of the mounting frame is greater than a radial distance of a limiting wall, which is away from the base body along the axial direction, with respect to the central axis of the mounting frame.
Clause 16. The motor rotor according to any one of clauses 12 to 15, wherein:
   the magnet steel is of an integral structure and forms a second step structure matched with the limiting wall; or
   the magnet steel comprises a plurality of blocks, at least a part of the plurality of blocks being provided in a radial direction, wherein among the plurality of blocks adjacent to each other in the radial direction, at least one side in the axial direction of a block located on the inner side in the radial direction extends in the axial direction out of a block located on the outer side in the radial direction, to form a third step structure matched with the limiting wall.
Clause 17. The motor rotor according to any one of clauses 12 to 16, wherein the mounting frame comprises a plurality of frame bodies, the plurality of frame bodies being connected in sequence to form the first step structure.
Clause 18. The motor rotor according to clause 17, wherein at least a part of the plurality of frame bodies is a first frame body, a plurality of first frame bodies being provided; and wherein the plurality of first frame bodies is annularly arranged in sequence from inside to outside along the radial direction and has respective thicknesses gradually increased in an axial direction, to form the first step structure.
Clause 19. The motor rotor according to clause 18, wherein at least a part of the plurality of frame bodies is a second frame body, the second frame body and the first frame body being provided in sequence along the axial direction to form the first step structure with the first frame body.
Clause 20. The motor rotor according to clause 17, wherein at least a part of the plurality of frame bodies is an annular third frame body, a plurality of third frame bodies being provided; wherein the plurality of third frame bodies is provided in sequence along the axial direction and the at least two adjacent third frame bodies have different inner diameters, to form the first step structure.
Clause 21. The motor rotor according to clause 20, wherein at least a part of the plurality of frame bodies is a fourth frame body, the fourth frame body comprising a receiving member and an annular member provided on the receiving member, wherein the third frame body and the receiving member are distributed in sequence along the axial direction and the annular member is annularly arranged on outer sides of the plurality of third frame bodies in the radial direction.
Clause 22. The motor rotor according to any one of clauses 17 to 21, wherein the plurality of frame bodies is of an integral structure or a split connection structure.
Clause 23. The motor rotor according to any one of clauses 7 to 16, wherein the mounting frame comprises a plurality of fifth frame bodies distributed in sequence along the axial direction, each of the plurality of fifth frame bodies having the magnet steel groove, the limiting walls of the magnet steel grooves of at least some adjacent ones of the plurality of fifth frame bodies being staggered in the radial direction.
Clause 24. The motor rotor according to any one of clauses 6 to 23, wherein circumferential dimensions of the magnet steel grooves are gradually increased outwardly in the radial direction.
Clause 25. The motor rotor according to any one of clauses 1 to 24, wherein the magnet steel comprises a plurality of blocks, the plurality of blocks being distributed in sequence along the radial direction, and/or along the axial direction, and/or along the circumferential direction.
Clause 26. The motor rotor according to clause 25, wherein:
   blocks of the plurality of blocks that are adjacent to each other in the radial direction are arranged or bonded at intervals; and/or
   blocks of the plurality of blocks that are adjacent to each other in the circumferential direction are arranged or bonded at intervals.
Clause 27. The motor rotor according to any one of clauses 1 to 3, wherein the magnet steel is provided on a surface of the mounting frame in the axial direction, and wherein the mounting frame is provided with the limiting wall located at an outer side of the magnet steel in the radial direction.
Clause 28. The motor rotor according to any one of clauses 1 to 27, wherein the mounting frame is a permeability magnetic material member or a non-permeability magnetic material member.
Clause 29. The motor rotor according to any one of clauses 1 to 28, wherein a plurality of magnet steels is provided and distributed in sequence along a circumferential direction on the mounting frame; and wherein the mounting frame further comprises a plurality of limiting structures distributed in sequence along the circumferential direction, each of the plurality of magnet steels being located between two limiting structures of the plurality of limiting structures that are adjacent to each other in the circumferential direction.
Clause 30. The motor rotor according to any one of clauses 1 to 29, wherein the magnet steel is fixedly connected to the mounting frame.
Clause 31. The motor rotor according to clause 30, wherein the magnet steel is in an interference fit with the mounting frame; and/or the magnet steel is in an injection-molded connection with the mounting frame; and/or the magnet steel is adhesively fixed to the mounting frame.
Clause 32. The motor rotor according to any one of clauses 1 to 31, further comprising a protective component, the magnet steel being exposed to one side or both sides of the mounting frame in the axial direction, the protective component being arranged on a side of the mounting frame to which the magnet steel is exposed.
Clause 33. The motor rotor according to clause 32, wherein the protective component is a permeability magnetic material component.
Clause 34. The motor rotor according to clause 32 or 33, wherein the protective component has a positioning groove, at least a part of the magnet steel being located in the positioning groove.
Clause 35. The motor rotor according to any one of clauses 32 to 34, wherein a plurality of mounting frames is provided and distributed in sequence along the axial direction, the protective component being provided between two adjacent mounting frames.
Clause 36. The motor rotor according to any one of clauses 32 to 35, wherein
   a plurality of protective components is provided and distributed in sequence along the axial direction;
   a plurality of mounting frames distributed in sequence along the axial direction is provided between two adjacent ones of the plurality of protective components; and/or one mounting frame is provided between two adjacent ones of the plurality of protective components, the magnet steel being exposed to both sides of the mounting frame in the axial direction.
Clause 37. A motor, comprising the motor rotor according to any one of clauses 1 to 36.
Clause 38. A power assembly, comprising the motor according to clause 37.
Clause 39. An electric apparatus, comprising the motor according to clause 37 or the power assembly according to clause 38.

## Claims

1. A motor rotor (10), comprising:
a mounting frame (11); and
a magnet steel (12) mounted to the mounting frame (11),
wherein the mounting frame (11) is provided with a limiting wall (101) for resisting a centrifugal movement of the magnet steel (12) in a radial direction (Y).

2. The motor rotor (10) according to claim 1, wherein the mounting frame (11) is provided with a plurality of mounting regions (102) distributed in the radial direction (Y), the magnet steel (12) being mounted in the plurality of mounting regions (102), at least one of the plurality of mounting regions (102) being provided with the limiting wall (101).

3. The motor rotor (10) according to claim 2, wherein a separator (111) is provided between two mounting regions (102) adjacent to each other in the radial direction (Y), a wall surface of the separator (111) facing towards a central axis (L) of the mounting frame (11) being the limiting wall (101).

4. The motor rotor (10) according to claim 3, wherein each of the plurality of mounting regions (102) adjacent to each other in the radial direction (Y) is provided with a magnet steel groove (1021), the magnet steel groove (1021) having the limiting wall (101); wherein the separator (111) is provided between two adjacent magnet steel grooves (1021), the wall surface of the separator (111) facing towards the central axis (L) of the mounting frame (11) being the limiting wall (101) of the magnet steel groove (1021) located at an inner side of the separator (111) in the radial direction (Y).

5. The motor rotor (10) according to any one of claims 2 to 4, wherein each of the plurality of mounting regions (102) is provided with the limiting wall (101), the limiting walls (101) of the plurality of mounting regions (102) being distributed at intervals in the radial direction (Y), and/or wherein at least one of the plurality of mounting regions (102) is provided with a magnet steel groove (1021), the magnet steel groove (1021) having the limiting wall (101), and/or
wherein the magnet steel (12) has a profile matched with the limiting wall (101) of the magnet steel groove (1021).

6. The motor rotor (10) according to claim 5, wherein each of the plurality of mounting regions (102) adjacent to each other in the radial direction (Y) is provided with the magnet steel groove (1021), the two adjacent magnet steel grooves (1021) being in communication with each other in the radial direction (Y), the limiting wall (101) being provided at a position where the two adjacent magnet steel grooves (1021) are in communication with each other wherein, optionally, a first boss (112) is provided on a side wall in a circumferential direction (X) of a part connecting the two adjacent magnet steel grooves (1021), a wall surface of the first boss (112) facing towards the central axis (L) of the mounting frame (11) being the limiting wall (101)
wherein, more optionally:
the magnet steel (12) is of an integral structure and has a second boss (1211) matched with the limiting wall (101); or
the magnet steel (12) comprises a plurality of blocks (121), at least a part of the plurality of blocks (121) being arranged along the radial direction (Y), wherein among two blocks of the plurality of blocks (121) that are adjacent to each other in the radial direction (Y), at least one side in the circumferential direction (X) of one block located on an inner side in the radial direction (Y) extends in the circumferential direction (X) out of one block located on an outer side in the radial direction (Y), to form a third boss (1212) matched with the limiting wall (101)
wherein, still more optionally, the two adjacent magnet steel grooves (1021) are a first magnet steel groove (1021a) and a second magnet steel groove (1021b) located on an outer side of the first magnet steel groove (1021a) in the radial direction (Y); wherein a circumferential dimension (H1) of an outer side of the second magnet steel groove (1021b) in the radial direction (Y) is greater than a circumferential dimension (H2) of an inner side of the second magnet steel groove (1021b) in the radial direction (Y), and wherein two opposite sides of the outer side in the radial direction (Y) of the first magnet steel groove (1021a) in the circumferential direction (X) extend in the circumferential direction (X) out of the inner side of the second magnet steel groove (1021b) in the radial direction (Y), to form the first boss (112).

7. The motor rotor (10) according to any one of claim 6, wherein the plurality of magnet steel grooves (1021) arranged in the radial direction (Y) forms a first step structure (1101) in an axial direction (Z), a wall surface of the first step structure (1101) facing towards a central axis (L) of the mounting frame (11) being the limiting wall (101), wherein, optionally, in the axial direction (Z), radial distances of at least a part of the limiting walls (101) with respect to the central axis (L) of the mounting frame (11) are gradually increased, and/or wherein a radial distance of at least one of the limiting walls (101) with respect to the central axis (L) of the mounting frame (11) is greater than or smaller than radial distances of two limiting walls (101), which are adjacent to each other in the axial direction (Z), with respect to the central axis (L) of the mounting frame (11).

8. The motor rotor (10) according to any one of claim 7, wherein the mounting frame (11) further comprises a base body (113g), the first step structure (1101) being provided on the base body (113g); wherein the radial distance of at least one of the limiting walls (101) with respect to the central axis (L) of the mounting frame (11) is greater than a radial distance of a limiting wall (101), which is away from the base body (113g) along the axial direction (Z), with respect to the central axis (L) of the mounting frame (11), and/or,
wherein:
the magnet steel (12) is of an integral structure and forms a second step structure (1201) matched with the limiting wall (101); or
the magnet steel (12) comprises a plurality of blocks (121), at least a part of the plurality of blocks (121) being provided in a radial direction (Y), wherein among the plurality of blocks (121) adjacent to each other in the radial direction (Y), at least one side in the axial direction (Z) of a block located on the inner side in the radial direction (Y) extends in the axial direction (Z) out of a block located on the outer side in the radial direction (Y), to form a third step structure (1202) matched with the limiting wall (101).

9. The motor rotor (10) according to any one of claims 7 or 8, wherein the mounting frame (11) comprises a plurality of frame bodies (113), the plurality of frame bodies (113) being connected in sequence to form the first step structure (1101) wherein, optionally, at least a part of the plurality of frame bodies (113) is a first frame body (113a), a plurality of first frame bodies (113a) being provided; and wherein the plurality of first frame bodies (113a) is annularly arranged in sequence from inside to outside along the radial direction (Y) and has respective thicknesses gradually increased in an axial direction (Z), to form the first step structure (1101)
wherein, more optionally, at least a part of the plurality of frame bodies (113) is a second frame body (113b), the second frame body (113b) and the first frame body (113a) being provided in sequence along the axial direction (Z) to form the first step structure (1101) with the first frame body (113a)
wherein, still more optionally at least a part of the plurality of frame bodies (113) is an annular third frame body (113c), a plurality of third frame bodies (113c) being provided; wherein the plurality of third frame bodies (113c) is provided in sequence along the axial direction (Z) and the at least two adjacent third frame bodies (113c) have different inner diameters, to form the first step structure (1101)
wherein, still more optionally at least a part of the plurality of frame bodies (113) is a fourth frame body (113d), the fourth frame body (113d) comprising a receiving member (1131d) and an annular member (1132d) provided on the receiving member (1131d), wherein the third frame body (113c) and the receiving member (1131d) are distributed in sequence along the axial direction (Z) and the annular member (1132d) is annularly arranged on outer sides of the plurality of third frame bodies (113c) in the radial direction (Y).

10. The motor rotor (10) according to claim 9, wherein, still more optionally, the plurality of frame bodies (113) is of an integral structure or a split connection structure.

11. The motor rotor (10) according to any one of claims 5 to 8, wherein the mounting frame (11) comprises a plurality of fifth frame bodies (113e) distributed in sequence along the axial direction (Z), each of the plurality of fifth frame bodies (113e) having the magnet steel groove (1021), the limiting walls (101) of the magnet steel grooves (1021) of at least some adjacent ones of the plurality of fifth frame bodies (113e) being staggered in the radial direction (Y).

12. The motor rotor (10) according to any one of claims 5 to 11, wherein circumferential dimensions of the magnet steel grooves (1021) are gradually increased outwardly in the radial direction (Y).

13. The motor rotor (10) according to any one of claims 1 to 12, wherein the magnet steel (12) comprises a plurality of blocks (121), the plurality of blocks (121) being distributed in sequence along the radial direction (Y), and/or along the axial direction (Z), and/or along the circumferential direction (X) wherein, optionally:
blocks (121) of the plurality of blocks (121) that are adjacent to each other in the radial direction (Y) are arranged or bonded at intervals; and/or
blocks (121) of the plurality of blocks (121) that are adjacent to each other in the circumferential direction (X) are arranged or bonded at intervals.

14. The motor rotor (10) according to any one of claims 1 to 3, wherein the magnet steel (12) is provided on a surface of the mounting frame (11) in the axial direction (Z), and wherein the mounting frame (11) is provided with the limiting wall (101) located at an outer side of the magnet steel (12) in the radial direction (Y), and/or wherein the mounting frame (11) is a permeability magnetic material member or a non-permeability magnetic material member, and/or wherein a plurality of magnet steels (12) is provided and distributed in sequence along a circumferential direction (X) on the mounting frame (11); and wherein the mounting frame (11) further comprises a plurality of limiting structures (114) distributed in sequence along the circumferential direction (X), each of the plurality of magnet steels (12) being located between two limiting structures (114) of the plurality of limiting structures (114) that are adjacent to each other in the circumferential direction (X), and/or wherein the magnet steel (12) is fixedly connected to the mounting frame (11)
wherein, optionally, the magnet steel (12) is in an interference fit with the mounting frame (11); and/or the magnet steel (12) is in an injection-molded connection with the mounting frame (11); and/or the magnet steel (12) is adhesively fixed to the mounting frame (11).

15. The motor rotor (10) according to any one of claims 1 to 14, further comprising a protective component (13), the magnet steel (12) being exposed to one side or both sides of the mounting frame (11) in the axial direction (Z), the protective component (13) being arranged on a side of the mounting frame (11) to which the magnet steel (12) is exposed, and/or wherein the protective component (13) is a permeability magnetic material component wherein, optionally, the protective component (13) has a positioning groove, at least a part of the magnet steel (12) being located in the positioning groove wherein, more optionally, a plurality of mounting frames (11) is provided and distributed in sequence along the axial direction (Z), the protective component (13) being provided between two adjacent mounting frames (11) wherein, still more optionally,
a plurality of protective components (13) is provided and distributed in sequence along the axial direction (Z);
a plurality of mounting frames (11) distributed in sequence along the axial direction (Z) is provided between two adjacent ones of the plurality of protective components (13); and/or one mounting frame (11) is provided between two adjacent ones of the plurality of protective components (13), the magnet steel (12) being exposed to both sides of the mounting frame (11) in the axial direction (Z).
